# EUROPEAN PATENT APPLICATION

(11) **EP 4 819 734 A1**
(43) Date of publication of application: **07.10.2026**
(21) Application number: 23959956.6
(22) Date of filing: 01.12.2023
(51) Int. Cl.: H04W 72/21

(54) **DATA TRANSMISSION METHOD AND APPARATUS, AND DEVICE AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZHANG, Yi, Dongguan, Guangdong 523860 (CN); LIN, Yanan, Dongguan, Guangdong 523860 (CN)
(74) Representative: Taor, Simon Edward William
(86) International application number: PCT/CN2023/135932
(87) International publication number: WO 2025/112050

(57) **Abstract**

A data transmission method and apparatus, and a device and a storage medium, which relate to the technical field of communications. The method comprises: a terminal device transmitting uplink data on a first channel, wherein the first channel supports carrying control information (510). By means of transmitting uplink data on a first channel that supports carrying control information, for example, transmitting the uplink data by using an uplink control channel, an improvement in the reliability of small data transmission and an improvement in the system efficiency are facilitated.

## Description

### TECHNICAL FIELD

Embodiments of the present application relate to the technical field of communications, and particularly to a method and an apparatus for data transmission, a device and a storage medium.

### BACKGROUND

For uplink data transmission, communication systems typically support the following two manners: 1. Dynamic scheduling; 2. Semi-persistent scheduling.

With the development of communication technologies, for example, for 6G Ultra Reliable Low Latency Communication (URLLC) services, the amount of data transmitted in a single transmission is not large, but the requirements for reliability and latency are extremely high. Moreover, these URLLC packets arrive randomly in most cases. For such applications, using either of the above two manners for uplink scheduling has certain drawbacks.

Therefore, further research on uplink data transmission is still needed.

### SUMMARY

Embodiments of the present application provide a method and an apparatus for data transmission, a device and storage medium. The technical solution provided by the embodiments of the present application is as follows.

According to an aspect of the embodiments of the present application, there is provided a method for data transmission, the method being performed by a terminal device and including the following operation.

Uplink data is transmitted on a first channel, the first channel supporting carrying control information.

According to an aspect of the embodiments of the present application, there is provided a method for data transmission, the method being performed by a network device and including the following operation.

Uplink data transmitted on a first channel is received, the first channel supporting carrying control information.

According to an aspect of the embodiments of the present application, there is provided an apparatus for data transmission, the apparatus including a sending module.

The sending module is configured to transmit uplink data on a first channel, the first channel supporting carrying control information.

According to an aspect of the embodiments of the present application, there is provided an apparatus for data transmission, the apparatus including a receiving module.

The receiving module is configured to receive uplink data transmitted on a first channel, the first channel supporting carrying control information.

According to an aspect of an embodiment of the present application, there is provided a communication device, including: a processor, and a memory for storing a computer program. The processor executes the computer program to implement the method for data transmission on the terminal device side or to implement the method for data transmission on the network device side as described above.

According to an aspect of the present application, there is provided a computer-readable storage medium, having stored therein a computer program that, when executed by a processor, cause to implement the method for data transmission on the terminal device side or to implement the method for data transmission on the network device side as described above.

According to an aspect of the present application, there is provided a computer program product, including computer instructions stored in a computer-readable storage medium, where a processor reads and executes the computer instructions from the computer-readable storage medium to implement the method for data transmission on the terminal device side or to implement the method for data transmission on the network device side as described above.

The technical solution provided by the embodiments of the present application may include the following beneficial effect.

By transmitting uplink data on a first channel that supports carrying control information, such as transmitting the uplink data via an uplink control channel, the reliability of small-packet data transmission and system efficiency are improved.

### BRIEF DESCRIPTION OF THE DRAWINGS

FIG. 1 is a schematic diagram of architecture of a communication system provided by embodiments of the present application.
FIG. 2 is a schematic diagram of architecture of another communication system provided by embodiments of the present application.
FIG. 3 is a schematic diagram of architecture of another communication system provided by embodiments of the present application.
FIG. 4 is a schematic diagram of the number of UCI bits corresponding to different PUCCH resource sets provided by an embodiment of the present application.
FIG. 5 is a flowchart of a method for data transmission provided by an embodiment of the present application.
FIG. 6 is a schematic diagram illustrating that first control information indicates transmission of uplink data provided by an embodiment of the present application.
FIG. 7 is a schematic diagram illustrating that first control information indicates uplink data and uplink feedback information are transmitted on the same channel provided by an embodiment of the present application.
FIG. 8 is a schematic diagram illustrating that first control information indicates uplink data and uplink feedback information are transmitted on different channels provided by an embodiment of the present application.
FIG. 9 is a schematic diagram illustrating offset values of a time domain resource occupied by a first channel relative to other time domain resources provided by an embodiment of the present application.
FIG. 10 is a schematic diagram of determining a resource position of a first channel based on a resource position of a third channel provided by an embodiment of the present application.
FIG. 11 is a schematic diagram of determining resource positions of a first channel and a second channel based on a resource position of a third channel provided by an embodiment of the present application.
FIG. 12 is a flowchart of a method for data transmission provided by another embodiment of the present application.
FIG. 13 is a block diagram of an apparatus for data transmission provided by an embodiment of the present application.
FIG. 14 is a block diagram of an apparatus for data transmission provided by another embodiment of the present application.
FIG. 15 is a schematic structural diagram of a terminal device provided by an embodiment of the present application.
FIG. 16 is a schematic structural diagram of a network device provided by an embodiment of the present application.

### DETAILED DESCRIPTION

In order to make the objectives, technical solutions, and advantages of the present application more clear, embodiments of the present application will be described in further detail below with reference to the accompanying drawings.

The network architecture and service scenarios described in the embodiments of the present application are for more clearly describing the technical solutions of the embodiments of the present application, and do not constitute a limitation on the technical solutions provided by the embodiments of the present application. Those of ordinary skill in the art may know that with the evolution of the network architecture and emergence of new service scenarios, the technical solutions provided by the embodiments of the present application are also applicable to similar technical problems.

The technical solutions provided by the embodiments of the present application may be applied to various communication systems, such as a Global System of Mobile communication (GSM) system, a Code Division Multiple Access (CDMA) system, a Wideband Code Division Multiple Access (WCDMA) system, a General Packet Radio Service (GPRS) system, a Long Term Evolution (LTE) system, an Advanced long term evolution (LTE-A) system, a New Radio (NR) system, an evolution system of the NR system, a LTE-based access to unlicensed spectrum (LTE-U) system on unlicensed spectrum, an NR-based access to unlicensed spectrum (NR-U) system, a Non-Terrestrial Networks (NTN) system, a Universal Mobile Telecommunication System (UMTS), wireless local area networks (WLAN), Wireless Fidelity (Wi-Fi), a 5th-Generation (5G) system, a Beyond 5G (B5G), or 6th-Generation (6G) system, or other communication systems.

Generally, conventional communication systems support a limited number of connections and are easy to implement. However, with the development of communication technology, the mobile communication system will support not only conventional communication, but also support, for example, Device to Device (D2D) communication, Machine to Machine (M2M) communication, Machine Type Communication (MTC), Vehicle to Vehicle (V2V) communication, or Vehicle to everything (V2X) communication, and the like. The embodiments of the present application may also be applied to these communication systems.

The communication system in the embodiments of the present application may be applied to a Carrier Aggregation (CA) scenario, a Dual Connectivity (DC) scenario, or a Standalone (SA) deployment scenario.

The communication system in the embodiments of the present application may be applied to an unlicensed spectrum, where the unlicensed spectrum may also be regarded as a shared spectrum. Alternatively, the communication system in the embodiments of the present application may also be applied to a licensed spectrum, where the licensed spectrum may also be regarded as a non-shared spectrum.

The embodiments of the present application may be applied to a Non-Terrestrial Networks (NTN) system or a terrestrial networks (TN) system. NTN generally provides communication services to ground users by means of satellite communication. Current NTN systems include NR-NTN and IoT-NTN systems, and may further include other NTN systems in the future.

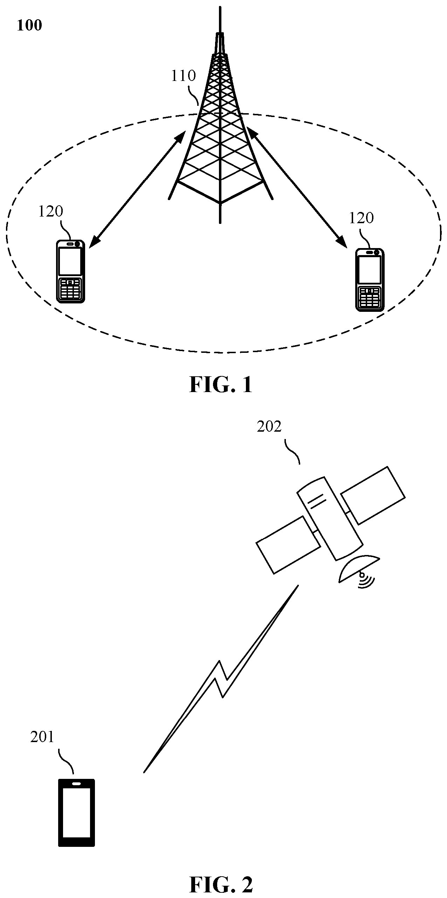

As an example, FIG. 1 is a schematic diagram of architecture of a communication system provided by the present application. As illustrated in FIG. 1, a communication system 100 may include a network device 110. The network device 110 may be a device that communicates with terminal devices 120. The network device 110 may provide communication coverage for a particular geographic area and may communicate with terminal devices located within the coverage area.

FIG. 1 exemplarily illustrates one network device 110 and two terminal devices 120. In some embodiments of the present application, the communication system 100 may include multiple network devices and another number of terminal devices may be included within the coverage of each network device, which is not limited in the embodiments of the present application.

As an example, FIG. 2 is a schematic diagram of architecture of another communication system provided by embodiments of the present application. Referring to FIG. 2, the communication system may include a terminal device 201 and a satellite 202, and wireless communication may be performed between the terminal device 201 and the satellite 202. The network formed between the terminal device 201 and the satellite 202 may also be referred to as NTN. In the architecture of the communication system illustrated in FIG. 2, the satellite 202 may have functions of a base station, and the terminal device 201 and the satellite 202 may communicate directly. Under such system architecture, the satellite 202 may be referred to as a network device. In some embodiments of the present application, the communication system may include multiple satellites 202, and another number of terminal devices may be included within the coverage of each satellite 202, which is not limited in the embodiments of the present application.

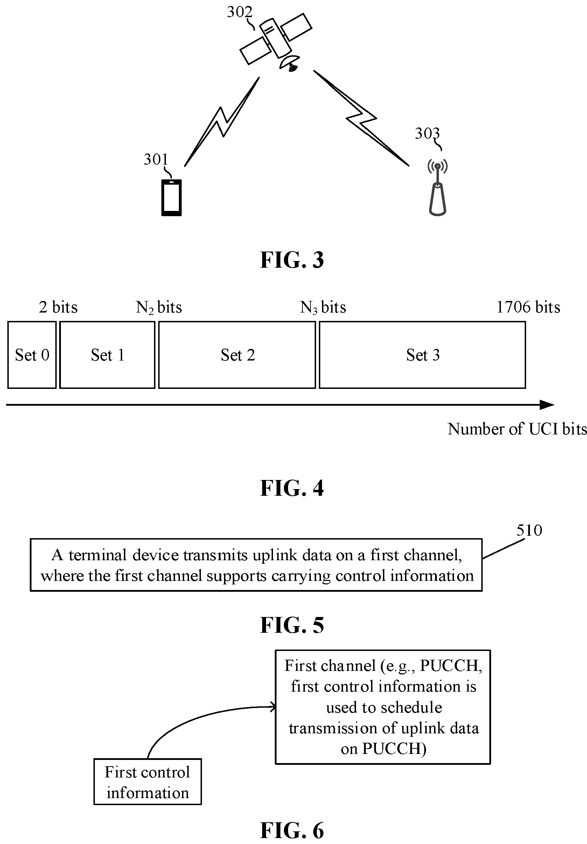

As an example, FIG. 3 is a schematic diagram of architecture of another communication system provided by embodiments of the present application. Referring to FIG. 3, the communication system may include a terminal device 301, a satellite 302 and a base station 303, and wireless communication may be performed among the terminal device 301, the satellite 302 and the base station 303. The network formed among the terminal device 301, the satellite 302 and the base station 303 may also be referred to as NTN. In the architecture of the communication system illustrated in FIG. 3, the satellite 302 may not have functions of a base station, and communications between the terminal device 301 and the base station 303 may need the forwarding via the satellite 302. Under such system architecture, the base station 303 may be referred to as a network device. In some embodiments of the present application, the communication system may include multiple base stations 303, each base station 303 may communicate with one or more satellites, and another number of terminal devices may be included within the coverage of each base station 302, which is not limited in the embodiments of the present application.

In future-evolving communication systems such as B5G or 6G, scenarios such as Distributed Multiple-Input Multiple-Output (Distributed MIMO, also referred to as Distributed Antenna System) and/or Massive Multiple-Input Multiple-Output (Massive MIMO, also known as Large-Scale Antenna Arrays) may also be included. In certain cases, the Distributed MIMO and/or Massive MIMO may also support Cell-free and/or UE-centric deployment scenarios. It should be understood that the aforementioned scenarios are also applicable to both Terrestrial Networks (TN) and Non-Terrestrial Networks (NTN).

For example, the terminal device mentioned in the embodiments of the present application may refer to a user equipment (UE), an access terminal, a subscriber unit, a subscriber station, a mobile station, a mobile platform, a remote station, a remote terminal, a mobile device, a wireless communication device, a user agent, or a user device. Optionally, the terminal device 10 may also be a cellular phone, a cordless phone, a Session Initiation Protocol (SIP) telephone, a Wireless Local Loop (WLL) station, a Personal Digita1 Assistant (PDA), a handhold device with wireless communication function, a computing device or other processing device connected to a wireless modem, an in-vehicle device, a wearable device, a terminal device in the 5th Generation System (5GS), or a terminal device in future Pub1ic Land Mobi1e Network (PLMN), etc., which are not limited in the embodiments of the present application. For convenience of description, the above-mentioned devices are collectively referred to as terminal devices. In the embodiments of the present application, "terminal device" and "UE" are are generally used interchangeably, but those skilled in the art may understand that they may express the same meaning.

The network device mentioned in the embodiments of the present application may be an access network device, which may be deployed on the ground or on a satellite. The access network device is a device deployed in an access network to provide wireless communication functions for terminal devices. The access network device may include various forms of macro base stations, micro base stations, relay stations, access points, and the like. In systems adopting different radio access technologies, devices with the functions of access network device may have different names. For example, in a 5G NR system, such devices are referred to as gNodeB or gNB. With the evolution of communication technologies, the term "access network device" may be subject to changes. For convenience of description, in the embodiments of the present application, the above-mentioned devices for providing wireless communication functions for terminal devices are collectively referred to as access network devices. Optionally, a communication connection may be established between the terminal device and the core network device via the access network device.

The term "5G NR system" in the embodiments of the present application may also be referred to as a 5G system or an NR system, and those skilled in the art may understand the meaning thereof. The technical solutions described in the embodiments of the present application may be applicable to an LTE system, a 5G NR system, an evolved system (such as a B5G system and a 6G system) subsequent to the 5G NR system, and other communication systems such as an NB-IoT (Narrow Band Internet of Things) system, which are not limited thereto in present application.

In the embodiments of the present application, the network device may provide services for a cell, and the terminal device communicates with the network device through transmission resources (for example, frequency domain resources or spectrum resources) on carriers used by the cell. The cell may be a cell corresponding to the network device (for example, a base station), and the cell may belong to a macro base station or a base station corresponding to a Small cell. Here, the small cell may include a Metro cell, a Micro cell, a Pico cell, a Femto cell, etc. These small cells have the characteristics of small coverage and low transmission power, and are suitable for providing high-speed data transmission services.

For uplink data transmission, communication systems typically support the following two manners: 1. Dynamic scheduling; 2. Semi-persistent scheduling.

### 1. dynamic scheduling

Dynamic scheduling refers to an uplink data transmission manner in which a network device schedules transmission through Downlink Control Information (DCI). A terminal device receives the DCI sent by the network device, and then sends uplink data based on parameters contained in the DCI. The advantage of dynamic scheduling is that the scheduler determines transmission parameters according to real-time traffic volume and physical channel conditions, resulting in high transmission efficiency.

### 2. UL Configured Grant (UL CG)

UL CG refers to an uplink data transmission manner in which a network device schedules transmission through higher-layer signaling (e.g., Radio Resource Control (RRC) signaling). A terminal device receives the high-layer signaling (e.g., RRC signaling) sent by the network device, and sends uplink data based on parameters contained in the high-layer signaling. UL CG belongs to an uplink data transmission manner under Semi-Persistent Scheduling (SPS). For scenarios involving periodically arrived data with constant traffic volume and stable transmission conditions (for example, when the terminal device is not moving rapidly), using UL CG to schedule uplink data transmission enables DCI overhead and uplink transmission latency in the system to be reduced.

Next, a Physical Uplink Control Channel (PUCCH) in the NR system will be described.

The PUCCH in the NR system is used to transmit Uplink Control Information (UCI), including Hybrid Automatic Repeat request-Acknowledgement (HARQ-ACK), Scheduling Request (SR), Channel State Information (CSI), and combinations thereof.

NR PUCCH is designed with high reliability, high flexibility and high efficiency, and supports formats of both long PUCCH and short PUCCH. Short PUCCH occupies 1-2 symbols and includes PUCCH format 0 and PUCCH format 2. Long PUCCH occupies 4-14 symbols and includes PUCCH format 1, PUCCH format 3 and PUCCH format 4. The number of symbols occupied by and the number of information bits carried in each of the above five PUCCH formats are shown in Table 1 below:

**Table 1**

| PUCCH format | Number of OFDM symbols | Number of bits |
|---|---|---|
| 0 | 1-2 | ≤2 |
| 1 | 4-14 | ≤2 |
| 2 | 1-2 | >2 |
| 3 | 4-14 | >2 |
| 4 | 4-14 | >2 |

PUCCH format 0/1 carries a smaller number of information bits, less than or equal to 2 bits. PUCCH format 2/3/4 may carry a larger number of information bits, greater than 2 bits, and in this case, the information bits need to be coded. When the length of UCI information (possibly including Cyclic Redundancy Check (CRC)) is between 3 bits and 11 bits, channel coding of small block lengths, such as Reed Muller Code, is used, and when the length of UCI information exceeds 11 bits, Polar Code is used for coding. Among them, PUCCH format 0/1/4 supports multi-user multiplexing capability.

For NR PUCCH, the resource allocation manner is as follows. K PUCCH resource sets are configured, and each resource set carries a different range of UCI bits, where K is a positive integer. As illustrated in FIG. 4, four PUCCH resource sets are configured, which are set 0, set 1, set 2, and set 3, respectively. The number of UCI bits carried in set 0 is less than or equal to 2 bits, the number of UCI bits carried in set 1 is greater than 2 bits and less than or equal to N₂ bits, the number of UCI bits carried in set 2 is greater than N₂ bits and less than or equal to N₃ bits, and the number of UCI bits carried in set 3 is greater than N₃ bits and less than or equal to 1706 bits, where N₂ is greater than 2, N₃ is less than 1706, N₂ is less than N₃, and both N₂ and N₃ are positive integers. Each set may include the same or different PUCCH formats. One resource set is determined from the K resource sets according to the number of UCI bits to be transmitted. Then, a PUCCH resource is determined from the determined resource set according to the indication of DCI. This manner may support the inclusion of both long PUCCH and short PUCCH in the same resource set, enabling dynamic switching between long and short PUCCHs. In addition, the number of long and short PUCCHs in each resource set is fully configurable by a network device (e.g., base station), thereby offering greater flexibility for network device configuration.

With the development of communication technologies, for example, in 6G Ultra Reliable Low Latency Communication (URLLC) services, the amount of data transmitted in a single transmission is not large, but the requirements for reliability and latency are extremely high, for example, latency requirement of 0.1ms and reliability requirement of 99.99999%. Moreover, these URLLC packets arrive randomly in many cases, and using the current data transmission method has the following drawbacks.

First, when using the UL CG transmission mode, since transmission parameters are semi-persistently configured, to guarantee the transmission performance under the worst-case scenario, the configuration tends to be conservative, resulting in low transmission efficiency and incompatibility with mobile conditions. Moreover, to guarantee low latency, the scheduling period must be configured very small, leading to resource waste.

Second, when using the dynamic scheduling transmission mode, Physical Uplink Shared Channel (PUSCH) resources may be dynamically scheduled according to channel conditions and packet sizes. However, PUSCH typically adopts Low Density Parity Check Code (LDPC) coding, which offers lower reliability compared with Polar code for small packet sizes. Moreover, PUSCH does not support spreading operations, and its support for multi-user multiplexing relies entirely on Multiple-Input Multiple-Output (MIMO) multiple-antenna configurations, which increases the operational difficulty of terminal devices pairing in practical applications. In addition, the scheduling of PUSCH depends entirely on DCI, and thus requires a relatively large number of DCI indication fields, resulting in a high DCI payload.

Based on the above considerations, the present application proposes a solution for transmitting uplink data over an uplink control channel (e.g., PUCCH), in order to improve the reliability of packet data transmission and system efficiency.

FIG. 5 is a flowchart of a method for data transmission provided by an embodiment of the present application. The method includes operation S510.

In operation 510, a terminal device transmits uplink data on a first channel, where the first channel supports carrying control information.

In some embodiments, information may be classified into two types: data information and control information. The data information may be embodied in the form of Transport Blocks (TBs) or Protocol Data Units (PDUs), etc. The control information may be embodied in the form of UCI, configuration information, grant information, etc. The control information may also be referred to as signaling information. Generally, the number of bits of the control information is smaller than that of the data information.

In some embodiments, the first channel is a channel that supports carrying control information. The first channel may be a control channel, which may be a control channel for uplink transmission, supporting the carrying of control information, and it can be referred to as an uplink control channel. In some embodiments, the first channel is a PUCCH, which supports carrying uplink control information. The uplink control information refers to control information sent by the terminal device to the network device. As communication technology evolves, the name of the uplink control channel may change. For example, it may no longer be called PUCCH but be given another name, which is not limited in the present application.

In some embodiments, when the first channel is a PUCCH, the first channel may be limited to constrained PUCCH formats. In some embodiments, the above constrained PUCCH formats include at least one of: PUCCH formats with spreading, PUCCH formats carrying a number of bits greater than 2. The reason is that a PUCCH format that supports spreading and carries a large number of bits is more suitable for data transmission.

By transmitting uplink data on a control channel (which may be, but is not limited to, a PUCCH), inherent characteristics of the control channel, such as using spreading, using channel coding of Polar code, or using channel coding of small block lengths, may be fully utilized. For uplink data transmission, the use of spreading enables multi-user multiplexing capability and uplink data transmission efficiency to be improved. In addition, the use of channel coding of Polar code or of small block lengths offers advantages over LDPC coding during coding of small packets.

In some embodiments, the first channel is a channel that supports carrying data information. The first channel may be a data channel, which may be a data channel for uplink transmission and supporting carrying data information, and it can thus be called an uplink data channel. In some embodiments, the first channel is a PUSCH, which supports carrying uplink data information. The uplink data information refers to data information sent by the terminal device to the network device. As communication technology evolves, the name of the uplink data channel may change. For example, it may no longer be called PUSCH but be given another name, which is not limited in the present application.

In some embodiments, the first channel is a channel that supports carrying data information and control information. In some embodiments, the first channel is an extension or enhancement of an existing data channel, which not only supports carrying data information but also extends or enhances the ability to carry control information. In some embodiments, the first channel is a data channel with a first characteristic. The first characteristic may be a characteristic(s) of a control channel. In some embodiments, the first channel is a PUSCH with a first characteristic, or called an extended or enhanced PUSCH (i.e., a PUSCH with spreading). In some embodiments, the first characteristic includes at least one of: using spreading, using channel coding of Polar code, or using channel coding of small block lengths.

In some embodiments, the first channel is an extension or enhancement of an existing control channel, which not only supports carrying control information but also extends or enhances the ability to carry data information. In some embodiments, the first channel is an extended or enhanced PUCCH (i.e., a PUCCH with spreading).

In some embodiments, the first channel is a newly defined channel in a standard or protocol, which has the ability to support carrying data information and control information, and has the above first characteristic. The name of the first channel is not limited in the present application.

By extending or enhancing the data channel (which may be, but is not limited to, a PUSCH) to enable that it has characteristics of a control channel (which may be, but is not limited to, a PUCCH), such as using spreading, using channel coding of Polar code, or using channel coding of small block lengths etc., the transmission efficiency of uplink data can be improved.

In some embodiments, the terminal device receives first control information, where the transmitting the uplink data on the first channel is determined according to the first control information. In some embodiments, the terminal device determines whether to transmit the uplink data using the first channel based on indication of the first control information. The first control information may be sent by a network device. In some embodiments, the network device sends first control information for indicating whether the uplink data is transmitted using the first channel. Accordingly, the terminal device receives the first control information, and determines whether to transmit the uplink data using the first channel based on indication of the first control information.

In some embodiments, if it is determined, based on the indication of the first control information, that the uplink data is transmitted using the first channel, the terminal device transmits the uplink data on the first channel.

In some embodiments, if it is determined, based on the indication of the first control information, that the uplink data is not transmitted using the first channel, the terminal device does not transmit the uplink data on the first channel.

In this way, the transmission of uplink data is dynamically scheduled by downlink control information, which helps to ensure the transmission efficiency of uplink data.

In some embodiments, a format of the first control information is an information format used for scheduling of an uplink channel. In some embodiments, the first control information may be uplink grant (UL grant) information. In some embodiments, the first control information is used only to schedule uplink data. As illustrated in FIG. 6, taking the first channel as a PUCCH for example, the format of the first control information is an information format for scheduling of the PUCCH, and the first control information is used for scheduling the transmission of uplink data on the PUCCH. When the first control information is used only for scheduling the uplink data, the payload size of the first control information may be made smaller.

In the following, several possible implementation manners for the first control information to indicate transmission of the uplink data on the first channel are introduced.

In manner 1, the first control information includes first indication information.

An explicit indication information, i.e., the first indication information, is included in the first control information to indicate the transmission of the uplink data on the first channel.

In manner 1-1, the first indication information is used to indicate whether the uplink data is transmitted using the first channel.

In some embodiments, when the first indication information takes a first value, it indicates that the uplink data is transmitted using the first channel; or when the first indication information takes a second value, it indicates that the uplink data is not transmitted using the first channel. The first value and the second value are different.

In some embodiments, the first indication information may be represented in 1 bit. For example, the first value is 1, and the second value is 0. When the first indication information takes 1, it indicates that the uplink data is transmitted using the first channel. When the first indication information takes 0, it indicates that the uplink data is not transmitted using the first channel. For another example, the first value is 0, and the second value is 1. When the first indication information takes 0, it indicates that the uplink data is transmitted using the first channel. When the first indication information takes 1, it indicates that the uplink data is not transmitted using the first channel.

In some embodiments, taking the first channel as a PUCCH for example, when the first indication information takes a first value, it indicates that the uplink data is transmitted using the PUCCH; or when the first indication information takes a second value, it indicates that the uplink data is not transmitted using the PUCCH. The first value and the second value are different.

In some embodiments, taking the first channel as a PUCCH for example, when the first indication information takes a first value, it indicates that the uplink data is transmitted using the PUCCH; or when the first indication information takes a second value, it indicates that the uplink data is transmitted using a PUSCH. The first value and the second value are different.

In addition, the first value and the second value have been described as examples only using the values of 0 and 1, and the first value and the second value may also be distinguished by other non-numerical forms of information. In some embodiments, the first value and the second value are distinguished using "enable" and "disable", which is not limited in the present application.

Through the manner 1-1, an explicit indication information is used to indicate whether the uplink data is transmitted using the first channel, which is relatively simple and intuitive to implement.

In manner 1-2, the first indication information is used to indicate a first format among multiple formats of the first channel, and the uplink data is transmitted on the first channel of the first format.

In the embodiments of the present application, the first format may be one of multiple formats of the first channel. For the first format appearing elsewhere in this application, reference may be made to this explanation.

The first channel may have multiple formats. In some embodiments, the formats of the first channel may be divided according to at least one of the following factors: a data amount of uplink data that can be carried, a type of control information that can be carried, a data amount of control information that can be carried, or a multiplexing type of data information and control information that can be supported. Here, the data amount of the control information may also be referred to as a payload size. In some embodiments, the first channel of different formats correspond to different amounts of uplink data that can be carried, or different types of control information that can be carried, or different payload sizes of control information that can be carried, or different multiplexing types of data information and control information that can be supported. In the embodiments of the present application, the factors on which the division of the formats of the first channel is based are not specifically limited.

The first indication information may have multiple different values (or called codepoints), each value corresponding to a first channel of one format. For example, the first channel includes two formats, denoted as first format and second format, and the first indication information has two different values that correspond to the first format and the second format, respectively. For example, the first channel includes three formats, denoted as first format, second format, and third format, and the first indication information has three different values that correspond to the first format, the second format, and the third format, respectively. The correspondence between the values for the first indication information and the formats of the first channel may be agreed by a protocol or configured by a network device, which is not limited in the present application.

In some embodiments, the first indication information may be represented in N bits, where N is a positive integer, and it can indicate up to 2^{N} different formats. For example, when N is equal to 1, the first indication information can indicate up to two different formats. For example, when N is equal to 2, the first indication information can indicate up to four different formats.

In addition, for any one of the multiple formats described above, it may include only one format or multiple formats. Alternatively, for any one of the multiple formats described above, it may be a format set including one or more formats.

Through the manner 1-2, an explicit indication information is used to indicate that the uplink data is transmitted using a first channel with a certain format, which enables transmission of different uplink data using different formats of first channel. That is, an appropriate first channel is used to transmit the uplink data, which improves the transmission efficiency of uplink data and the utilization of channel resources.

In manner 1-3, the first indication information is used to indicate whether the uplink data is transmitted using the first channel, and when the uplink data is transmitted using the first channel, the first indication information is further used to indicate a first format among multiple formats of the first channel, and the uplink data is transmitted on the first channel of the first format.

The manner 1-3 is a combined implementation of the above manners 1-1 and 1-2.

In some embodiments, the first indication information may be represented in N bits, N being an integer greater than 1, and the first indication information has up to 2^{N} values (or codepoints). One of the 2^{N} values is used to indicate that the uplink data is not transmitted using the first channel, and the remaining 2^{N}-1 values may be used to indicate transmission of the uplink data on the first channel of up to 2^{N}-1 formats.

As an example, N is equal to 2 and the first channel is PUCCH. The values of the first indication information and their corresponding indication results may be shown in Table 2 below:

**Table 2**

| First indication information | Indication result |
|---|---|
| 00 | Uplink data is transmitted on PUSCH |
| 01 | Uplink data is transmitted on PUCCH of first format |
| 11 | Uplink data is transmitted on PUCCH of second format |
| 10 | Uplink data is transmitted on PUCCH of third format |

The above first format, the second format, and the third format in Table 2 represent three different PUCCH formats. In addition, the PUCCH formats may be divided according to at least one of the following factors: a data amount of uplink data that can be carried, a type of control information that can be carried, a data amount of control information that can be carried, or a data multiplexing type of data information and control information that can be supported, which are not limited the present application.

Through the manner 1-3, the first indication information may indicate whether the uplink data is transmitted using the first channel, and may also indicate that the uplink data is transmitted using a certain format of first channel when the uplink data is transmitted using the first channel, the first indication information, thereby improving the indication ability of the first indication information.

In the manner 1, the first control information includes first indication information, and the first indication information is used to indicate whether the uplink data is transmitted on the first channel, which has higher flexibility.

In manner 2, the first control information is scrambled with a scrambling sequence.

By scrambling the first control information with the scrambling sequence, the terminal device is enabled to determine whether to transmit the uplink data on the first channel according to the scrambling sequence used for the received first control information. In some embodiments, the scrambling sequence may be a Radio Network Temporary Identifier (RNTI) sequence.

In manner 2-1, the scrambling sequence is used to indicate whether the uplink data is transmitted using the first channel.

In some embodiments, two different scrambling sequences are used to indicate whether the uplink data is transmitted using the first channel. Exemplarily, the above two different scrambling sequences include a first scrambling sequence and a second scrambling sequence. The first scrambling sequence is used for indicating that the uplink data is transmitted using the first channel, and the second scrambling sequence is used for indicating that uplink data is not transmitted using the first channel.

In some embodiments, taking the first channel as a PUCCH for example, the first scrambling sequence is used to indicate that the uplink data is transmitted using the PUCCH, and the second scrambling sequence is used to indicate that the uplink data is not transmitted using the PUCCH.

In some embodiments, taking the first channel as a PUCCH for example, the first scrambling sequence is used to indicate that the uplink data is transmitted using the PUCCH, and the second scrambling sequence is used to indicate that the uplink data is transmitted using a PUSCH.

Through the manner 2-1, a scrambling sequence is used to indicate whether the uplink data is transmitted using the first channel, which is relatively simple and intuitive to implement.

In manner 2-2, the scrambling sequence is used to indicate a first format among multiple formats of the first channel, and the uplink data is transmitted on the first channel of the first format.

For the description of the formats of the first channel, reference may be made to the above and they will not be repeated here.

In some embodiments, M different scrambling sequences are used to indicate transmission of the uplink data in the first channel of M formats, M being an integer greater than 1.

Exemplarily, two different scrambling sequences are used to indicate transmission of the uplink data in the first channel of two formats. The two different scrambling sequences include a first scrambling sequence and a second scrambling sequence, and the first channel includes two formats, denoted as a first format and a second format. The first scrambling sequence corresponds to the first format, and the second scrambling sequence corresponds to the second format. Taking the first channel as a PUCCH for example, when the first control information is scrambled with the first scrambling sequence, it indicates that the uplink data is transmitted in the PUCCH of the first format; when the first control information is scrambled with the second scrambling sequence, it indicates that the uplink data is transmitted in the PUCCH with the second format.

Through the manner 2-2, the scrambling sequence is used to indicate that the uplink data is transmitted using the first channel with a certain format, which enables transmission of different uplink data using the first channel of different formats. That is, an appropriate first channel is used to transmit the uplink data, which improves the transmission efficiency of uplink data and the utilization of channel resources.

In manner 2-3, the scrambling sequence is used to indicate whether the uplink data is transmitted using the first channel, and when the uplink data is transmitted using the first channel, the scrambling sequence is further used to indicate a first format among multiple formats of the first channel, where the uplink data is transmitted on the first channel of the first format.

The manner 2-3 is a combined implementation of the above manners 2-1 and 2-2.

In some embodiments, M different scrambling sequences are used, one of which is used to indicate that the uplink data is not transmitted using the first channel, and the remaining M-1 scrambling sequences may be used to indicate that the uplink data is transmitted on the first channel of up to M-1 formats, M being an integer greater than 1.

As an example, M is equal to 4 and the first channel is a PUCCH. Different scrambling sequences and their corresponding indication results can be shown in Table 3 below:

**Table 3**

| Scrambling sequence | Indication result |
|---|---|
| First scrambling sequence | Uplink data is transmitted on PUSCH |
| Second scrambling sequence | Uplink data is transmitted on PUCCH of first format |
| Third scrambling sequence | Uplink data is transmitted on PUCCH of second format |
| Fourth scrambling sequence | Uplink data is transmitted on PUCCH of third format |

The above first format, the second format, and the third format in Table 3 represent three different PUCCH formats. In addition, the PUCCH formats may be divided according to at least one of the following factors: a data amount of uplink data that can be carried, a type of control information that can be carried, a data amount of control information that can be carried, or a data multiplexing type of data information and control information that can be supported, which are not limited the present application.

Through the manner 2-3, the scrambling sequence may indicate whether the uplink data is transmitted using the first channel, and the scrambling sequence may also indicate that the uplink data is transmitted using the first channel of a certain format when the uplink data is transmitted using the first channel, thereby improving the indication ability of the scrambling sequence.

In the manner 2, whether to transmit the uplink data on the first channel is indicated by the scrambling sequence used for scrambling the first control information, which does not incur additional bit overhead. However, when the number of RNTI sequences used for scrambling becomes excessive, it may affect the number of users accessing the cell.

In manner 3, the first control information has different formats.

By defining different formats for the first control information, the formats of the first control information are used to indicate whether the uplink data is transmitted using the first channel. The formats of the first control information may be agreed by a protocol or configured by a network device, which is not limited in the present application.

In manner 3-1, the format of the first control information is used to indicate whether the uplink data is transmitted using the first channel.

In some embodiments, the first control information has two different formats, which are used to indicate whether the uplink data is transmitted using the first channel. Exemplarily, the above two different formats include format 1 and format 2, the format 1 of the first control information is used to indicate that the uplink data is transmitted using the first channel, and the format 2 of the first control information is used to indicate that the uplink data is not transmitted using the first channel.

In some embodiments, taking the first channel as a PUCCH for example, the format 1 of the first control information is used to indicate that the uplink data is transmitted using the PUCCH, and the format 2 of the first control information is used to indicate that the uplink data is not transmitted using the PUCCH.

In some embodiments, taking the first channel as a PUCCH for example, the format 1 of the first control information is used to indicate that the uplink data is transmitted using the PUCCH, and the format 2 of the first control information is used to indicate that theuplink data is transmitted using a PUSCH.

Through the manner 3-1, whether the uplink data is transmitted using the first channel is indicated by the formats of the first control information, which is relatively simple and intuitive to implement.

In manner 3-2, the format of the first control information is used to indicate a first format among multiple formats of the first channel, and the uplink data is transmitted on the first channel of the first format.

Regarding the description for the formats of the first channel, reference may be made to the above and it will not be repeated here.

In some embodiments, the first control information has M different formats for indicating transmission of the uplink data in the first channel of M formats, M being an integer greater than 1.

Exemplarily, the first control information has two different formats for indicating transmission of uplink data in the first channel of two formats. The two different formats of the first control information include format 1 and format 2, and the first channel includes two formats, denoted as first format and second format. The format 1 of the first control information corresponds to the first channel of the first format, and the format 2 of the first control information corresponds to the first channel of the second format. Taking the first channel as a PUCCH for example, when the first control information is of format 1, it indicates that the uplink data is transmitted in the PUCCH of the first format; when the first control information is of format 2, it indicates that the uplink data is transmitted in the PUCCH of the second format.

Through the manner 2-2, the format of the first control information is used to indicate that the uplink data is transmitted using the first channel with a certain format, which enables transmission of different uplink data using the first channel with different formats. That is, an appropriate first channel is used to transmit the uplink data, which improves the transmission efficiency of uplink data and the utilization of channel resources.

In manner 3-3, the format of the first control information is used to indicate whether the uplink data is transmitted using the first channel, and when the uplink data is transmitted using the first channel, the format of the first control information is further used to indicate a first format among multiple formats of the first channel, and the uplink data is transmitted on the first channel of the first format.

The manner 3-3 is a combined implementation of the above manners 3-1 and 3-2.

In some embodiments, the first control information has M different formats, one of which is used to indicate that the uplink data is not transmitted using the first channel, and the remaining M-1 formats may be used to indicate transmission of the uplink data in the first channel of up to M-1 formats, M being an integer greater than 1.

As an example, M is equal to 4 and the first channel is PUCCH. Different formats of the first control information and their corresponding indication results can be shown in Table 4 below:

**Table 4**

| Format of first information | Indication result |
|---|---|
| Format 1 | Uplink data is transmitted on PUSCH |
| Format 2 | Uplink data is transmitted on PUCCH of first format |
| Format 3 | Uplink data is transmitted on PUCCH of second format |
| Format 4 | Uplink data is transmitted on PUCCH of third format |

The above first format, the second format, and the third format in Table 4 represent three different PUCCH formats. In addition, the PUCCH formats may be divided according to at least one of the following factors: a data amount of uplink data that can be carried, a type of control information that can be carried, a data amount of control information that can be carried, or a data multiplexing type of data information and control information that can be supported, which are not limited the present application.

Through the manner 3-3, the format of the first control information may indicate whether the uplink data is transmitted using the first channel, and the format of the first control information may also indicate that the uplink data is transmitted using a first channel of a certain format when the uplink data is transmitted using the first channel, thereby improving the indication ability of the format of the first control information.

For the manner 3, by defining different formats for the first control information, for example, when the first control information is DCI, by defining different DCI formats to indicate whether the uplink data is transmitted on the first channel, the number of bits for the first control information can be kept small.

It is to be noted that a combination of the manners 1 to 3 may be adopted.

In some embodiments, taking a combination of manners 1 and 2 as an example, the scrambling sequence is used to indicate whether the uplink data is transmitted using the first channel, and the first indication information is used to indicate a first format among multiple formats of the first channel, where the uplink data is transmitted on the first channel of the first format.

In some embodiments, taking a combination of manners 1 and 2 as an example, the first indication information is used to indicate whether the uplink data is transmitted using the first channel, and the scrambling sequence is used to indicate a first format among multiple formats of the first channel, where the uplink data is transmitted on the first channel of the first format.

In some embodiments, taking a combination of manners 1 and 3 as an example, the format of the first control information is used to indicate whether the uplink data is transmitted using the first channel, and the first indication information is used to indicate a first format of multiple formats of the first channel, where the uplink data is transmitted on the first channel of the first format.

In some embodiments, taking a combination of manners 1 and 3 as an example, the first indication information is used to indicate whether the uplink data is transmitted using the first channel, and the format of the first control information is used to indicate a first format among multiple formats of the first channel, where the uplink data is transmitted on the first channel of the first format.

In some embodiments, taking a combination of manners 2 and 3 as an example, the scrambling sequence is used to indicate whether the uplink data is transmitted using the first channel, and the format of the first control information is used to indicate a first format among multiple formats of the first channel, where the uplink data is transmitted on the first channel of the first format.

In some embodiments, taking a combination of manners 2 and 3 as an example, the format of the first control information is used to indicate whether the uplink data is transmitted using the first channel, and the scrambling sequence is used to indicate a first format among multiple formats of the first channel, where the uplink data is transmitted on the first channel of the first format.

Based on the above manners, through the combination of at least two of: the first indication information, the scrambling sequence, or the format of the first control information, it can indicate whether the uplink data is transmitted using the first channel, and further indicate that the uplink data is transmitted using the first channel of a certain format when the uplink data is transmitted using the first channel, thereby improving the indication ability.

In some embodiments, the scrambling sequence/format of the first control information is used to indicate that the uplink data is transmitted on a PUCCH or a PUSCH, and then the first indication information is used to indicate which PUCCH format is used for transmission.

In some embodiments, when the first control information is used to schedule uplink data, the first control information is further used to indicate resource information of the first channel. The resource information of the first channel is used to indicate a transmission resource used for the first channel. The transmission resource of the first channel refers to a resource used for information transmission on the first channel, and includes one or more of the following: a time domain resource, a frequency domain resource, a spatial domain resource, a code domain resource, or the like. For the resource information of the first channel, reference may be made to the following description for details.

In some embodiments, the first control information is used to schedule downlink data and uplink data. In some embodiments, the first control information may be downlink grant (DL grant) information. In some embodiments, the first control information is used to schedule downlink data, uplink feedback information corresponding to the downlink data, and the uplink data. At this time, the downlink data and the uplink data may be multiplexed and scheduled with the same control information, thereby improving the utilization of PDCCH. The uplink feedback information corresponding to the downlink data refers to HARQ-ACK information corresponding to the downlink data.

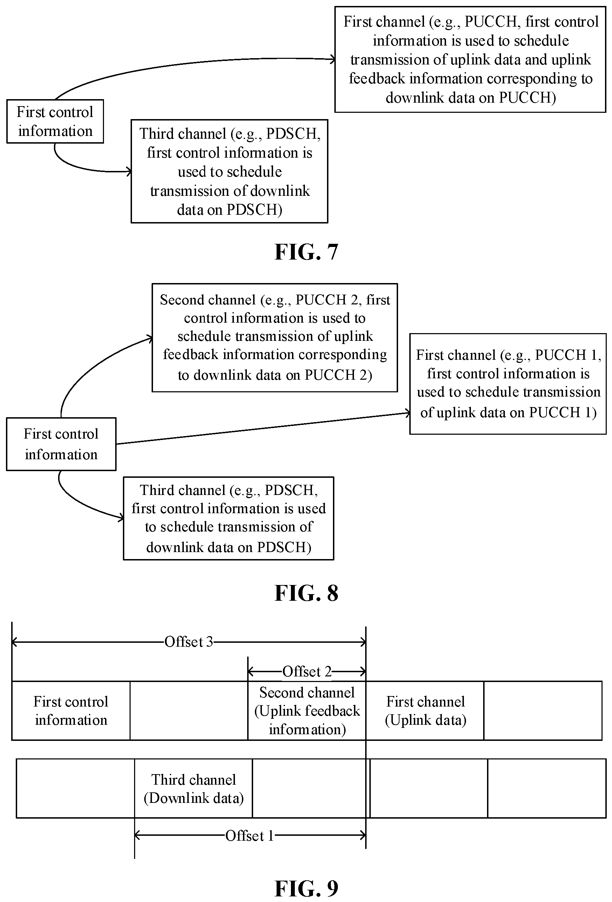

In some embodiments, the uplink feedback information corresponding to the downlink data is transmitted on the first channel, that is, the uplink data and the uplink feedback information corresponding to the downlink data are transmitted on the same channel (i.e., the first channel). The first control information is of an information format for scheduling of a downlink data channel (e.g., a PDSCH). As illustrated in FIG. 7, taking the first channel as a PUCCH for example, first control information is of an information format for scheduling of a downlink data channel, and the first control information is used for scheduling transmission of downlink data on a third channel (e.g., a PDSCH), and for scheduling transmission of uplink feedback information corresponding to the downlink data and the uplink data on the PUCCH. In this manner, the uplink feedback information corresponding to the downlink data and the uplink data are transmitted on the same channel, which saves the number of bits for the first control information.

In some embodiments, the uplink feedback information corresponding to the downlink data is transmitted on a second channel, and the second channel is different from the first channel. That is, the uplink feedback information corresponding to the downlink data and the uplink data are transmitted on two different channels. The first control information is of an information format for scheduling of a downlink data channel (e.g., a PDSCH). As illustrated in FIG. 8, taking the first channel and the second channel as two different PUCCHs for example, the first control information is of an information format for scheduling of a downlink data channel, and the first control information is used for scheduling transmission of downlink data on a third channel (e.g., a PDSCH), scheduling transmission of uplink feedback information corresponding to the downlink data on PUCCH 2, and further scheduling transmission of uplink data on PUCCH 1, where the PUCCH 1 and the PUCCH 2 are two different PUCCHs. In this way, the uplink feedback information corresponding to the downlink data and the uplink data are transmitted on two different channels, offering high flexibility.

In some embodiments, when the first control information is used to schedule downlink data and the uplink data, the first control information is used to indicate whether the uplink data and first uplink feedback information are transmitted on the same channel, where the first uplink feedback information refers to uplink feedback information corresponding to the downlink data.

In some embodiments, when the uplink data and the first uplink feedback information are transmitted on the same channel, reference for the resource indication of the first channel for transmitting the uplink data may be made to the resource indication of the first uplink feedback information, and the resource information of the first channel does not need additional indication, thereby saving the number of bits for the first control information.

In some embodiments, when the uplink data and the first uplink feedback information are not transmitted on the same channel, the resource information of the first channel for transmitting the uplink data needs additional indication. At this time, the first control information is also used to indicate the resource information of the first channel.

Hereinafter, the resource information of the first channel mentioned above will be described. In some embodiments, the resource information of the first channel includes at least one of the following: time domain resource information of the first channel, frequency domain resource information of the first channel, spatial domain resource information of the first channel, HARQ process information corresponding to the uplink data carried on the first channel, redundant version information corresponding to the uplink data carried on the first channel, power control information of the first channel, data amount information of uplink data carried on the first channel, or spreading information of the first channel.

The time domain resource information of the first channel is used to indicate a time domain resource(s) allocated to the first channel. The time domain resource may be a frame, a subframe, a slot, a subslot, a symbol, a symbol group, a Cyclic Prefix (CP), a period, or the like. In some embodiments, the time domain resource information of the first channel is used to indicate at least one time domain unit occupied by the first channel, the time domain unit being any one of: a slot, a subslot, or a symbol. In some embodiments, the time domain unit may also be a frame, a subframe, a symbol group, a CP, a period, or the like, which is not limited in the present application.

The frequency domain resource information of the first channel is used to indicate a frequency domain resource(s) allocated to the first channel. The frequency domain resource may be a frequency band, a frequency segment, a subcarrier, a Bandwidth Part (BWP), a raster, a bandwidth, a Resource Block (RB), a Resource Block Group (RBG), a subband, or the like. In some embodiments, taking the first channel as a PUCCH for example, the frequency domain resource of the first channel includes at least one of: a PUCCH resource, a PUCCH resource set, a PUCCH format, or a PUCCH coding rate. In some embodiments, taking the first channel as an extended or enhanced PUSCH for example, the frequency domain resource of the first channel includes RBs occupied by the extended or enhanced PUSCH, and the like.

The spatial domain resource information of the first channel is used to indicate a spatial domain resource(s) allocated to the first channel. In some embodiments, the spatial domain resource information may include at least one of: precoding information, or antenna port information. The precoding information is used to indicate a precoding mode for information transmitted on the first channel, and the precoding mode includes, but is not limited to, at least one of: linear precoding, non-linear precoding, codebook-based precoding, non-codebook precoding, or the like. The antenna port information is used to indicate an antenna port(s) used for transmission of the first channel.

The HARQ process information corresponding to the uplink data carried on the first channel is used to indicate information such as a number and a state of the HARQ process corresponding to the uplink data carried on the first channel.

The redundancy version information corresponding to the uplink data carried on the first channel is used to indicate Redundancy Versions (RVs) corresponding to the uplink data carried on the first channel. The RVs are designed to implement incremental redundancy (IR) HARQ transmission, that is, redundant bits generated by an encoder are divided into several groups, each RV defines a transmission start point, and different RVs are used for the initial transmission and each of HARQ retransmissions respectively, so as to realize the gradual accumulation of redundant bits and complete the IR HARQ operation.

The power control information of the first channel is used to indicate the transmit power for information transmission on the first channel. The power control information may include open-loop power control information and/or closed-loop power control information.

The data amount information of the uplink data carried on the first channel is used to indicate a data amount agreed for the uplink data carried on the first channel. In some embodiments, the data amount may include or not include the number of bits of CRC information corresponding to the uplink data. In some embodiments, the data amount information of the uplink data carried on the first channel is used to indicate a Transport Block Size (TBS) specified for the uplink data carried on the first channel.

The spreading information of the first channel is used to indicate information such as spreading modes and spreading factors of the first channel.

Any information included in the resource information of the first channel mentioned above may be configured by the network device or agreed by a protocol, which is not limited in the present application.

By indicating the resource information of the first channel through the first control information, the terminal device is enabled to clearly obtain the transmission resources related to the first channel, so that the network device can correctly receive the first channel and correctly demodulate the uplink data carried on the first channel.

In some embodiments, the implementation in which the time domain resource information of the first channel indicates at least one time domain unit occupied by the first channel includes any of the following manners 1, 2, 3 and 4.
1. The time domain resource information of the first channel indicates an offset of a serial number of a first time domain unit among the at least one time domain unit occupied by the first channel with respect to a serial number of a second time domain unit among at least one time domain unit occupied by downlink data scheduled by first control information. This implementation may be applied to a case where the first control information is used to schedule downlink data and the uplink data, and the uplink data and uplink feedback information corresponding to the downlink data are transmitted on two different channels.

The first time domain unit may be a start time domain unit (i.e., the earliest time domain unit in the time domain position) among the at least one time domain unit occupied by the first channel, or may be an end time domain unit (i.e., the latest time domain unit in the time domain position) among the at least one time domain unit occupied by the first channel. In addition, when the first channel occupies only one time domain unit, the first time domain unit is the one time domain unit occupied by the first channel.

The second time domain unit may be a start time domain unit (i.e., the earliest time domain unit in the time domain position) among the at least one time domain unit occupied by the downlink data scheduled by the first control information, or may be an end time domain unit (i.e., the latest time domain unit in the time domain position) among the at least one time domain unit occupied by the downlink data scheduled by the first control information. In addition, when the downlink data scheduled by the first control information occupies only one time domain unit, the second time domain unit is the one time domain unit occupied by the downlink data scheduled by the first control information.

Here, the offset is described as follows. Assuming that the time domain unit in which the downlink data scheduled by the first control information is located is nD and the offset is k, then the time domain unit occupied by the first channel is n+k, where n is obtained from nD or the downlink data. This is because the downlink data is transmitted in downlink BWPs/carriers and the first channel is transmitted in uplink BWPs/carriers, and the Subcarrier Spacings (SCSs) for the uplink and downlink may be different, so nD cannot be directly equated to n. For example, n is the last uplink time domain unit that overlaps with nD, or n is the last uplink time domain unit that overlaps with the downlink data. The time domain unit may be a slot or another form of time domain unit, which is not limited in the present application.

2. The time domain resource information of the first channel indicates an offset of a serial number of a first time domain unit among the at least one time domain unit occupied by the first channel with respect to a serial number of a third time domain unit among at least one time domain unit occupied by uplink feedback information corresponding to downlink data scheduled by the first control information. This implementation may also be applied to the case where the first control information is used to schedule the downlink data and the uplink data, and the uplink data and the uplink feedback information corresponding to the downlink data are transmitted on two different channels.

The third time domain unit may be a start time domain unit (i.e., the earliest time domain unit in the time domain position) among the at least one time domain unit occupied by the uplink feedback information, or may be an end time domain unit (i.e., the latest time domain unit in the time domain position) among at least one time domain unit occupied by the uplink feedback information. In addition, when the uplink feedback information occupies only one time domain unit, the third time domain unit is the one time domain unit occupied by the uplink feedback information.

Here, the offset is described as follows. Assuming that the time domain unit in which the uplink feedback information corresponding to the downlink data scheduled by the first control information is located is n, and the offset is k, then the time domain unit occupied by the first channel is n+k. The time domain unit may be a slot or another form of time domain unit, which is not limited in the present application.

3. The time domain resource information of the first channel indicates an offset of a serial number of a first time domain unit among the at least one time domain unit occupied by the first channel with respect to a serial number of a fourth time domain unit among at least one time domain unit occupied by the first control information. This implementation may be applied to a case where the first control information is used to schedule downlink data, or may also be applied to a case where the first control information is used to schedule downlink data and the uplink data.

The fourth time domain unit may be a start time domain unit (i.e., the earliest time domain unit in the time domain position) among the at least one time domain unit occupied by the first control information, or may be an end time domain unit (i.e., the latest time domain unit in the time domain position) among at least one time domain unit occupied by the first control information. In addition, when the first control information occupies only one time domain unit, the fourth time domain unit is the one time domain unit occupied by the first control information.

Here, the offset is described as follows. Assuming that the time domain unit occupied by the first control information is nD and the offset is k, then the time domain unit occupied by the first channel is n+k, where n is obtained according to nD or the first control information. This is because the first control information is transmitted in downlink BWPs/carriers and the first channel is transmitted in uplink BWPs/carriers, the SCSs of the uplink and downlink may thus be different, so nD cannot be directly equated to n. For example, n is the last uplink time domain unit that overlaps with nD, or n is the last uplink time domain unit that overlaps with the first control information. The time domain unit may be a slot or another form of time domain unit, which is not limited in the present application.

4. The time domain resource information of the first channel indicates an absolute value of a serial number of a first time domain unit among the at least one time domain unit occupied by the first channel. This implementation may be applied to a case where the first control information is used to schedule downlink data, or may also be applied to a case where the first control information is used to schedule downlink data and the uplink data.

As illustrated in FIG. 9, offset 1 represents an offset of a serial number of a start time domain unit among the at least one time domain unit occupied by the first channel with respect to a serial number of a start time domain unit among at least one time domain unit occupied by downlink data scheduled by the first control information. Offset 2 represents an offset of a serial number of a start time domain unit among the at least one time domain unit occupied by the first channel with respect to a serial number of a start time domain unit among at least one time domain unit occupied by uplink feedback information corresponding to downlink data scheduled by the first control information. Offset 3 represents an offset of a serial number of a start time domain unit among the at least one time domain unit occupied by the first channel with respect to a serial number of a start time domain unit among at least one time domain unit occupied by the first control information.

Further, for the indication of frequency domain resource, when the first control information is used to schedule downlink data and the uplink data, and the uplink data and uplink feedback information corresponding to the downlink data are transmitted on two different channels, frequency domain resource indication information may likewise be used to indicate an absolute value of an index of the frequency domain resource occupied by the uplink data, or may be used to indicate an offset of an index of the frequency domain resource occupied by the uplink data with respect to a reference index. The reference index may be an index of a frequency domain resource occupied by the uplink feedback information corresponding to the downlink data. In some embodiments, when the first channel and the second channel are PUCCHs, the frequency domain resource mentioned above may be a PUCCH resource or a PUCCH resource set. In some embodiments, the index of the frequency domain resource may be an absolute serial number of the PUCCH resource or a relative serial number of the PUCCH resource set.

Through the above manner, the offset is indicated in the time domain resource indication information or frequency domain resource indication information, which saves the number of bits required for the above information.

In some embodiments, the transmission resource used for the first channel and/or the second channel described above may not necessarily be indicated by the first control information, but may be determined from the transmission resource used for a third channel. Herein, the third channel is used for transmitting downlink data. For example, the third channel may be a PDSCH. Herein, the third channel may be scheduled by the first control information, or may be configured by other configuration information. For example, the third channel may be an SPS PDSCH.

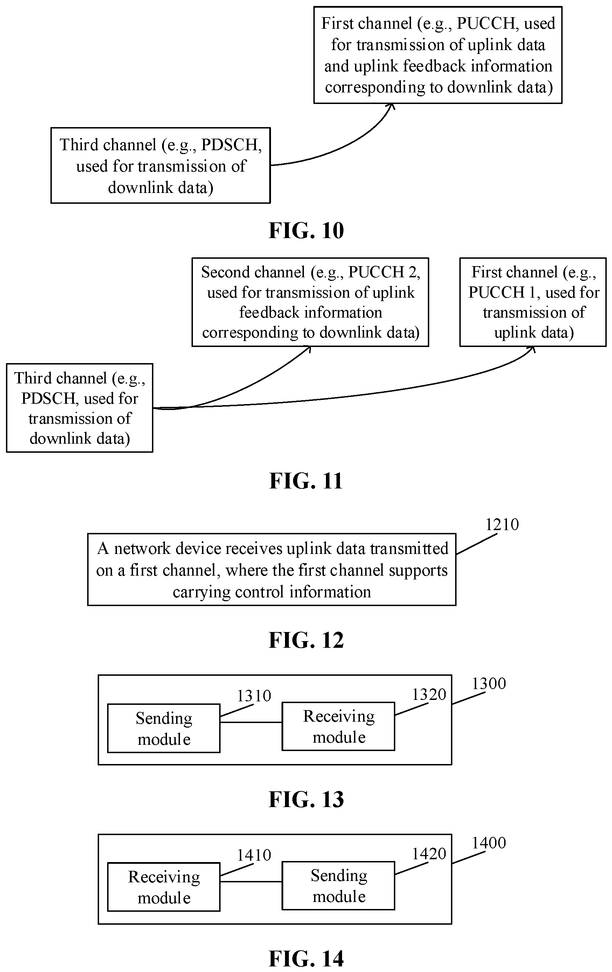

In some embodiments, uplink feedback information corresponding to the downlink data is transmitted on the first channel, that is, the uplink data and the uplink feedback information corresponding to the downlink data are transmitted on the same channel (i.e., the first channel). The first control information is of an information format for scheduling of a downlink data channel (e.g., PDSCH). As illustrated in FIG. 10, taking the first channel as a PUCCH for example, the first control information is of an information format for scheduling of a downlink data channel. The first control information is used for scheduling transmission of downlink data on a third channel (e.g., PDSCH), and for scheduling transmission of uplink feedback information corresponding to the downlink data and the uplink data on the PUCCH. In this way, the uplink data and the uplink feedback information corresponding to the downlink data are transmitted on the same channel. The transmission resource used for the first channel is determined according to the transmission resource used for the third channel.

In some embodiments, uplink feedback information corresponding to the downlink data is transmitted on a second channel, and the second channel is different from the first channel. That is, the uplink feedback information corresponding to the downlink data and the uplink data are transmitted on two different channels. The first control information is of an information format for scheduling of a downlink data channel (e.g., PDSCH). As illustrated in FIG. 11, taking the first channel and the second channel as two different PUCCHs for example, the first control information is of an information format for scheduling of a downlink data channel. The first control information is used for scheduling transmission of downlink data on a third channel (e.g., PDSCH), scheduling transmission of uplink feedback information corresponding to the downlink data on PUCCH 2, and scheduling transmission of uplink data on PUCCH 1, where the PUCCH 1 and the PUCCH 2 are two different PUCCHs. In this manner, the uplink data and the uplink feedback information corresponding to the downlink data are transmitted on two different channels. The transmission resource used for the first channel and the transmission resource used for the second channel are determined according to the transmission resource used for the third channel.

In some embodiments, the terminal device transmits uplink data on the first channel based on the third channel. The third channel is used to transmit downlink data, for example, the third channel may be a PDSCH. The third channel may be scheduled by the first control information, or may be configured by other configuration information, for example, the third channel may be an SPS PDSCH. The first channel may be a PUCCH. The resource information of the first channel may be agreed by a protocol, or configured by a network device, or carried on the third channel (e.g., PDSCH), which is not limited in the present application. In this implementation, the transmission of the first channel may be completely independent of the first control information, i.e., for one third channel, there is a corresponding first channel for transmission of uplink data.

In some embodiments, for the case where the terminal device transmits the uplink data on the first channel based on the indication of the first control information, the first channel satisfies the following timing condition that: a start time of the first channel is not earlier than a first preset duration after an end time of the first control information. The start time of the first channel being not earlier than the first preset duration after the end time of the first control information may be understood as: a time interval between the start time of the first channel and the end time of the first control information is equal to or greater than the first preset duration. In some embodiments, for different types of the first channel, such as PUCCH and PUSCH, their corresponding first preset durations may be different. In some embodiments, the first preset duration is related to a frequency range and/or subcarrier spacing, and the first preset duration may be agreed by a protocol or configured by a network device, which is not limited in the present application. Through the above implementation, it can be ensured that after receiving the first control information, the terminal device has sufficient time to prepare for transmission on the first channel.

In some embodiments, the terminal device receives first configuration information, where the transmitting the uplink data on the first channel is determined according to the first configuration information. In some embodiments, the terminal device determines whether to transmit uplink data using the first channel based on configuration of the first configuration information. The first configuration information may be sent by a network device. In some embodiments, the network device sends first configuration information for configuring whether the uplink data is transmitted using the first channel. Accordingly, the terminal device receives the first configuration information, and determines whether to transmit the uplink data using the first channel based on indication of the first configuration information.

In some embodiments, if it is determined, based on the configuration of the first configuration information, that the uplink data is transmitted using the first channel, the terminal device transmits the uplink data on the first channel.

In some embodiments, if it is determined, based on the configuration of the first configuration information, that the uplink data is not transmitted using the first channel, the terminal device does not transmit the uplink data on the first channel.

In this way, the transmission of the uplink data is semi-statically configured by configuration information, that is, the transmission resource for the uplink data is periodically reserved, which enables to save the transmission overhead of downlink control information, avoids the terminal device from blindly detecting the downlink control information, and saves power consumption of the terminal device, but the transmission efficiency of uplink data is relatively low.

In some embodiments, the first configuration information is used to configure information of the first channel. In some embodiments, the first configuration information is used to configure information of a resource used for the first channel. The resource used for the first channel includes one or more of the following: a time domain resource, a frequency domain resource, a spatial domain resource, a code domain resource, or the like.

In some embodiments, the information of the first channel includes at least one of: a period of the resource used for the first channel, a time domain position of the resource used for the first channel, a frequency domain position of the resource used for the first channel, a format of the resource used for the first channel, a coding rate of the resource used for the first channel, a data amount of data carried on the first channel, or spreading information of the first channel.

In some embodiments, the information of the resource used for the first channel includes at least one of: a period of the resource used for the first channel, a time domain position of the resource used for the first channel, a frequency domain position of the resource used for the first channel, a format of the resource used for the first channel, or a coding rate of the resource used for the first channel.

Since the transmission of the uplink data is semi-statically configured by configuration information, the resource used for the first channel is periodic resource at this time, and the configuration information may include the period of the resource used for the first channel.

The time domain position of the resource used for the first channel may include an offset of the resource used for the first channel in a period, an index or serial number of a time domain subunit, occupied by the resource used for the first channel, in a time domain unit, and the like. Herein, one time domain unit may include multiple time domain subunits, the time domain unit may be a slot, and the time domain subunit may be a symbol.

The frequency domain position of the resource used for the first channel may include an RB, an RBG, or the like occupied by the resource used for the first channel.

When the first channel is a PUCCH, since the PUCCH has multiple different formats, the formats of the resource used for the first channel may refer to PUCCH formats used for the first channel.

The coding rate of the resource used for the first channel is also called coding efficiency, and refers to the proportion of useful information in the coded data stream to the total information.

The data amount of the data carried on the first channel refers to the agreed data amount of the data carried on the first channel. In some embodiments, the data amount of the data carried on the first channel refers to the agreed Transport Block Sizes (TBSs) for the data carried on the first channel.

The spreading information of the first channel is used to indicate information such as spreading modes and spreading factors of the first channel.

By configuring the information of the first channel through the first configuration information, the terminal device is enabled to clearly know the transmission resource and/or transmission mode related to the first channel, thereby improving the reliability of uplink data transmission.

In some embodiments, channel coding of Polar code or channel coding of small block lengths (e.g., Reed Muller code), is adopted for the uplink data. In some embodiments, the data amount of the uplink data is constrained such that the maximum data amount does not exceed N bits. For example, N= 1706. In some embodiments, the uplink data may be transmitted in the form of Transport Blocks (TBs), Protocol Data Units (PDUs), or other forms, which is not limited in the present application. In some embodiments, if there is check information corresponding to the uplink data, the check information corresponding to the uplink data is also carried and transmitted on the first channel. The check information may be CRC information or other forms of check information, which is not limited in the present application. For the uplink transmission of small amount of data, using channel coding of Polar code or of small block lengths provides better performance than LDPC code.

In some embodiments, the data amount of the uplink data is determined according to at least one of the following: a number of RBs in the first channel used for transmitting the uplink data, a number of Resource elements (REs) per RB used for transmitting the uplink data, a number of REs in the first channel for transmitting the uplink data, a number of time domain units, in a resource used for the first channel, used for transmitting the uplink data, a coding rate of the resource used for the first channel, a coding rate corresponding to the uplink data, a modulation mode of the resource used for the first channel, or reference signal overhead of the resource used for the first channel. The reference signal overhead refers to overhead of a reference signal (e.g., the number of bits occupied by the reference signal), and the reference signal may be a Demodulation Reference Signal (DMRS) or other reference signals, which is not limited in the present application.

In some embodiments, when the information transmitted on the first channel only includes the uplink data, the coding rate of the resource used for the first channel is the same as the coding rate corresponding to the uplink data, and they refer to the same concept in essence.

In some embodiments, when the information transmitted on the first channel includes the uplink data and uplink control information (e.g., uplink feedback information corresponding to downlink data), the coding rate corresponding to the uplink data and the coding rate corresponding to the uplink control information may be the same or different. Therefore, the coding rate of the resource used for the first channel may refer to the coding code rate corresponding to the uplink data, or a coding rate corresponding to the uplink control information, or an average value of the coding rate corresponding to the uplink data and the coding rate corresponding to the uplink control information, or the like.

In some embodiments, the data amount of the uplink data includes the number of bits of the uplink data itself. If there is check information corresponding to the uplink data, the data amount of the uplink data includes the number of bits of the uplink data itself and the number of bits of the check information corresponding to the uplink data.

In some embodiments, the data amount of uplink $data = {M}_{RB - data} ∗ {N}_{sc - data}^{RB} ∗ {N}_{sym - data}^{PUCCH} ∗ {Q}_{m} * r$ ; where *M_{RB-data}* is the number of RBs used for transmitting the uplink data on the first channel, ${N}_{sc - data}^{RB}$ is the number of REs used for transmitting the uplink data per RB, ${N}_{sym - data}^{PUCCH}$ is the number of time domain units (e.g., symbols), in the resource used for the first channel, used for transmitting the uplink data, *Qₘ* is the modulation mode of the resource used for the first channel, and *r* is the coding rate of the resource used for the first channel.

In some embodiments, the data amount of uplink data = *REₜₒₜₐₗ* ∗ *Qₘ***r*; where *REₜₒₜₐₗ* is the number of REs in the first channel used for transmitting the uplink data, *Qₘ* is the modulation mode of the resource used for the first channel, and *r* is the coding rate of the resource used for the first channel.

According to the technical solution provided by the present application, by means of transmitting uplink data on a first channel that supports carrying uplink control information, for example, transmitting the uplink data via an uplink control channel, the reliability of small data transmission and the system efficiency are improved.

FIG. 12 is a flowchart of a method for data transmission provided by another embodiment of the present application. The method may be performed by a network device and include operation S1210.

In S1210, the network device receives uplink data transmitted on a first channel, where the first channel supports carrying control information.

In some embodiments, the method further includes that the network device sends first control information, where the transmitting the uplink data on the first channel is determined according to the first control information. In some embodiments, the first control information is used to indicate whether the uplink data is transmitted using the first channel. In some embodiments, the network device sends the first control information before receiving the uplink data transmitted on the first channel.

In some embodiments, the first control information includes first indication information. The first indication information is used to indicate whether the uplink data is transmitted using the first channel; and/or the first indication information is used to indicate a first format among multiple formats of the first channel, and the uplink data is transmitted on the first channel of the first format.

In some embodiments, the first control information is scrambled with a scrambling sequence. The scrambling sequence is used to indicate whether the uplink data is transmitted using the first channel; and/or the scrambling sequence is used to indicate a first format among multiple formats of the first channel, and the uplink data is transmitted on the first channel of the first format.

In some embodiments, a format of the first control information is used to indicate whether the uplink data is transmitted using the first channel; and/or a format of the first control information is used to indicate a first format among multiple formats of the first channel, and the uplink data is transmitted on the first channel of the first format.

In some embodiments, the format of the first control information is an information format used for scheduling of an uplink channel.

In some embodiments, the first control information is used to schedule downlink data and the uplink data.

In some embodiments, uplink feedback information corresponding to the downlink data is transmitted on the first channel; or, uplink feedback information corresponding to the downlink data is transmitted on a second channel, where the second channel is different from the first channel.

In some embodiments, the first control information is used to indicate whether the uplink data and first uplink feedback information are transmitted on the same channel, and the first uplink feedback information is uplink feedback information corresponding to the downlink data.

In some embodiments, the first control information is used to indicate resource information of the first channel.

In some embodiments, the resource information of the first channel includes at least one of the following: time domain resource information of the first channel, frequency domain resource information of the first channel, spatial domain resource information of the first channel, HARQ process information corresponding to uplink data carried on the first channel, redundant version information corresponding to uplink data carried on the first channel, power control information of the first channel, data amount information of uplink data carried on the first channel, or spreading information of the first channel.

In some embodiments, the time domain resource information of the first channel is used to indicate at least one time domain unit occupied by the first channel, and the time domain unit is any one of: a slot, a subslot, or a symbol.

In some embodiments, the time domain resource information of the first channel indicates at least one time domain unit occupied by the first channel through any of the following manners:
indicating an offset of a serial number of a first time domain unit among the at least one time domain unit occupied by the first channel with respect to a serial number of a second time domain unit among at least one time domain unit occupied by downlink data scheduled by the first control information;
indicating an offset of a serial number of a first time domain unit among the at least one time domain unit occupied by the first channel with respect to a serial number of a third time domain unit among at least one time domain unit occupied by uplink feedback information corresponding to downlink data scheduled by the first control information;
indicating an offset of a serial number of a first time domain unit among the at least one time domain unit occupied by the first channel with respect to a serial number of a fourth time domain unit among at least one time domain unit occupied by the first control information; or
indicating an absolute value of a serial number of a first time domain unit among the at least one time domain unit occupied by the first channel.

In some embodiments, the first channel satisfies a following timing condition that a start time of the first channel is not earlier than a first preset duration after an end time of the first control information.

In some embodiments, the method further includes that the network device sends first configuration information, where transmission of the uplink data on the first channel is determined according to the first configuration information. In some embodiments, the first configuration information is used to configure whether the uplink data is transmitted using the first channel. In some embodiments, the network device sends the first configuration information before receiving the uplink data transmitted on the first channel.

In some embodiments, the first configuration information is used to configure information of the first channel.

In some embodiments, the information of the first channel includes at least one of: a period of a resource used for the first channel, a time domain position of a resource used for the first channel, a frequency domain position of a resource used for the first channel, a format of a resource used for the first channel, an encoding rate of a resource used for the first channel, a data amount of data carried on the first channel, or spreading information of the first channel.

In some embodiments, channel coding of Polar code or channel coding of small block lengths is adopted for the uplink data.

In some embodiments, the data amount of the uplink data is determined according to at least one of the following: a number of RBs in the first channel used for transmitting the uplink data, a number of REs per RB used for transmitting the uplink data, a number of REs in the first channel used for transmitting the uplink data, a number of time domain units, in a resource used for the first channel, used for transmitting the uplink data, a coding rate of a resource used for the first channel, a coding rate corresponding to the uplink data, a modulation mode of a resource used for the first channel, or eference signal overhead of a resource used for the first channel.

In some embodiments, the first channel includes at least one of: a PUCCH, or a PUSCH with a first characteristic; where the first characteristic includes at least one of using spreading, using channel coding of Polar code, or using channel coding of small block lengths.

For details not described in detail in the method embodiments on the network device side, reference may be made to the above method embodiments on the terminal device side. In addition, for technical effects achieved by the method embodiments on the network device side, reference may also be made to the description of the method embodiments on the terminal device side, and the two are similar.

According to the technical solution provided by the present application, by means of receiving uplink data on a first channel that supports carrying control information, for example, receiving the uplink data by using an uplink control channel, the reliability of small data transmission and the system efficiency are improved.

The following are embodiments of an apparatus of the present application, which may be used to perform the method embodiments of the present application. For details not disclosed in the apparatus embodiments of the present application, reference may be made to the method embodiments of the present application.

FIG. 13 is a flowchart of an apparatus for data transmission provided by an embodiment of the present application. The apparatus has functions of realizing the method embodiments on the terminal device side described above, and the functions may be realized by hardware or may be realized by hardware executing corresponding software. The apparatus may be the terminal device described above, or may be provided in the terminal device. As illustrated in FIG. 13, the apparatus 1300 may include a sending module 1310.

The sending module 1310 is configured to transmit uplink data on a first channel, where the first channel supports carrying control information.

In some embodiments, as illustrated in FIG. 13, the apparatus further includes a receiving module 1320, configured to receive first control information, where the transmitting the uplink data on the first channel is determined according to the first control information.

In some embodiments, the sending module 1310 is configured to transmit the uplink data on the first channel if it is determined that the uplink data is transmitted using the first channel based on an indication of the first control information.

In some embodiments, the first control information includes first indication information; The first indication information is used to indicate whether the uplink data is transmitted using the first channel; and/or the first indication information is configured to indicate a first format among multiple formats of the first channel, where the uplink data is transmitted on the first channel of the first format.

In some embodiments, the first control information is scrambled with a scrambling sequence. The scrambling sequence is used to indicate whether the uplink data is transmitted using the first channel; and/or the scrambling sequence is used to indicate a first format among multiple formats of the first channel, where the uplink data is transmitted on the first channel of the first format.

In some embodiments, a format of the first control information is used to indicate whether the uplink data is transmitted using the first channel; and/or a format of the first control information is used to indicate a first format among multiple formats of the first channel, where the uplink data is transmitted on the first channel of the first format.

In some embodiments, the format of the first control information is an information format used for scheduling of an uplink channel.

In some embodiments, the first control information is used to schedule downlink data and the uplink data.

In some embodiments, uplink feedback information corresponding to the downlink data is transmitted on the first channel; or uplink feedback information corresponding to the downlink data is transmitted on a second channel, where the second channel is different from the first channel.

In some embodiments, the first control information is used to indicate whether the uplink data and first uplink feedback information are transmitted on the same channel, and the first uplink feedback information is uplink feedback information corresponding to the downlink data.

In some embodiments, the first control information is used to indicate resource information of the first channel.

In some embodiments, the resource information of the first channel includes at least one of: time domain resource information of the first channel; frequency domain resource information of the first channel; spatial domain resource information of the first channel; HARQ process information corresponding to the uplink data carried on the first channel; redundant version information corresponding to the uplink data carried on the first channel; power control information of the first channel; data amount information of the uplink data carried on the first channel; or spreading information of the first channel.

In some embodiments, the time domain resource information of the first channel is used to indicate at least one time domain unit occupied by the first channel, and the time domain unit is any one of: a slot, a subslot, or a symbol.

In some embodiments, the time domain resource information of the first channel indicates at least one time domain unit occupied by the first channel through any of the following:
indicating an offset of a serial number of a first time domain unit among the at least one time domain unit occupied by the first channel with respect to a serial number of a second time domain unit among at least one time domain unit occupied by downlink data scheduled by the first control information;
indicating an offset of a serial number of a first time domain unit among the at least one time domain unit occupied by the first channel with respect to a serial number of a third time domain unit among at least one time domain unit occupied by uplink feedback information corresponding to downlink data scheduled by the first control information;
indicating an offset of a serial number of a first time domain unit among the at least one time domain unit occupied by the first channel with respect to a serial number of a fourth time domain unit among at least one time domain unit occupied by the first control information; or
indicating an absolute value of a serial number of a first time domain unit among the at least one time domain unit occupied by the first channel.

In some embodiments, the first channel satisfies a following timing condition that a start time of the first channel is not earlier than a first preset duration after an end time of the first control information.

In some embodiments, as illustrated in FIG. 13, the apparatus further includes a receiving module 1320 configured to receive first configuration information, where the transmitting the uplink data on the first channel is determined according to the first configuration information.

In some embodiments, the sending module 1310 is configured to transmit the uplink data on the first channel if it is determined that the uplink data is transmitted using the first channel based on configuration of the first configuration information.

In some embodiments, the first configuration information is used to configure information of the first channel.

In some embodiments, the information of the first channel includes at least one of: a period of a resource used for the first channel, a time domain position of a resource used for the first channel, a frequency domain position of a resource used for the first channel, a format of a resource used for the first channel, a coding rate of a resource used for the first channel, a data amount of data carried on the first channel, or spreading information of the first channel.

In some embodiments, channel coding of Polar code or channel coding of small block lengths is adopted for the uplink data.

In some embodiments, the data amount of the uplink data is determined according to at least one of the following: a number of RBs in the first channel used for transmitting the uplink data, a number of REs per RB used for transmitting the uplink data, a number of REs in the first channel used for transmitting the uplink data, a number of time domain units, in a resource used for the first channel, used for transmitting the uplink data, a coding rate of ta resource used for the first channel, a coding rate corresponding to the uplink data, a modulation mode of a resource used for the first channel, or reference signal overhead of a resource used for the first channel.

In some embodiments, the first channel includes at least one of: a PUCCH, or a PUSCH with a first characteristic; where the first characteristic includes at least one of using spreading, using channel coding of Polar code, or using channel coding of small block lengths.

FIG. 14 is a flowchart of an apparatus for data transmission provided by another embodiment of the present application. The apparatus has functions of realizing the method embodiments on the network device side described above, and the functions may be realized by hardware or may be realized by hardware executing corresponding software. The apparatus may be the network device described above, or may be provided in the network device. As illustrated in FIG. 14, the apparatus 1400 may include a receiving module 1410.

The receiving module 1410 is configured to receive uplink data transmitted on a first channel, where the first channel supports carrying control information.

In some embodiments, as illustrated in FIG. 14, the apparatus further includes a sending module 1420, configured to send first control information, where transmission of the uplink data on the first channel is determined according to the first control information.

In some embodiments, the first control information is used to indicate whether the uplink data is transmitted using the first channel.

In some embodiments, the first control information includes first indication information. The first indication information is used to indicate whether the uplink data is transmitted using the first channel; and/or the first indication information is used to indicate transmission of the uplink data on the first channel of one of multiple formats.

In some embodiments, the first control information is scrambled with a scrambling sequence. The scrambling sequence is used to indicate whether the uplink data is transmitted using the first channel; and/or the scrambling sequence is used to indicate transmission of the uplink data on one of first channels of multiple formats.

In some embodiments, a format of the first control information is used to indicate whether the uplink data is transmitted using the first channel; and/or a format of the first control information is used to indicate transmission of the uplink data on one of first channels of multiple formats.

In some embodiments, the format of the first control information is an information format used for scheduling of an uplink channel.

In some embodiments, the first control information is used to schedule downlink data and the uplink data.

In some embodiments, uplink feedback information corresponding to the downlink data is transmitted on the first channel; or uplink feedback information corresponding to the downlink data is transmitted on a second channel, where the second channel is different from the first channel.

In some embodiments, the first control information is used to indicate whether the uplink data and the first uplink feedback information are transmitted on the same channel, and the first uplink feedback information is uplink feedback information corresponding to the downlink data.

In some embodiments, the first control information is used to indicate resource information of the first channel.

In some embodiments, the resource information of the first channel includes at least one of: time domain resource information of the first channel; frequency domain resource information of the first channel; spatial domain resource information of the first channel; HARQ process information corresponding to the uplink data carried on the first channel; redundant version information corresponding to the uplink data carried on the first channel; power control information of the first channel; data amount information of the uplink data carried on the first channel; or spreading information of the first channel.

In some embodiments, the time domain resource information of the first channel is used to indicate at least one time domain unit occupied by the first channel, and the time domain unit is any one of: a slot, a subslot, or a symbol.

In some embodiments, the time domain resource information of the first channel indicates at least one time domain unit occupied by the first channel through any of the following:
indicating an offset of a serial number of a first time domain unit among the at least one time domain unit occupied by the first channel with respect to a serial number of a second time domain unit among at least one time domain unit occupied by downlink data scheduled by the first control information;
indicating an offset of a serial number of a first time domain unit among the at least one time domain unit occupied by the first channel with respect to a serial number of a third time domain unit among at least one time domain unit occupied by uplink feedback information corresponding to downlink data scheduled by the first control information;
indicating an offset of a serial number of a first time domain unit among the at least one time domain unit occupied by the first channel with respect to a serial number of a fourth time domain unit among at least one time domain unit occupied by the first control information; or
indicating an absolute value of a serial number of a first time domain unit among the at least one time domain unit occupied by the first channel.

In some embodiments, the first channel satisfies a following timing condition that a start time of the first channel is not earlier than a first preset duration after an end time of the first control information.

In some embodiments, as illustrated in FIG. 14, the apparatus further includes a sending module 1420 configured to send first configuration information, where the transmitting the uplink data on the first channel is determined according to the first configuration information.

In some embodiments, the first configuration information is used to configure whether the uplink data is transmitted using the first channel.

In some embodiments, the first configuration information is used to configure information of the first channel.

In some embodiments, the information of the first channel includes at least one of: a period of a resource used for the first channel, a time domain position of a resource used for the first channel, a frequency domain position of a resource used for the first channel, a format of a resource used for the first channel, a coding rate of a resource used for the first channel, a data amount of data carried on the first channel, or spreading information of the first channel.

In some embodiments, channel coding of Polar code or channel coding of small block lengths is adopted for the uplink data.

In some embodiments, the data amount of the uplink data is determined according to at least one of the following: a number of RBs in the first channel used for transmitting the uplink data, a number of REs for transmitting the uplink data per RB, a number of REs in the first channel used for transmitting the uplink data, a number of time domain units, in a resource used for the first channel, used for transmitting the uplink data, a coding rate of a resource used for the first channel, a coding rate corresponding to the uplink data, a modulation mode of a resource used for the first channel, or reference signal overhead of the resource used for the first channel.

In some embodiments, the first channel includes at least one of: a PUCCH, or a PUSCH with a first characteristic; where the first characteristic includes at least one of using spreading, using channel coding of Polar code, or using channel coding of small block lengths.

It should be noted that the apparatuses provided in the above embodiments, when realizing realizes their functions, are described merely by way of example through the division of the aforementioned functional modules. In practical applications, the above functions may be allocated to and completed by different functional modules as needed. That is, the internal structure of the device may be divided into different functional modules to accomplish all or part of the functions described above.

With regard to the apparatuses in the above embodiments, the specific implementations in which various modules perform operations have been described in detail in the embodiments related to the methods, and will not be elaborated in detail here.

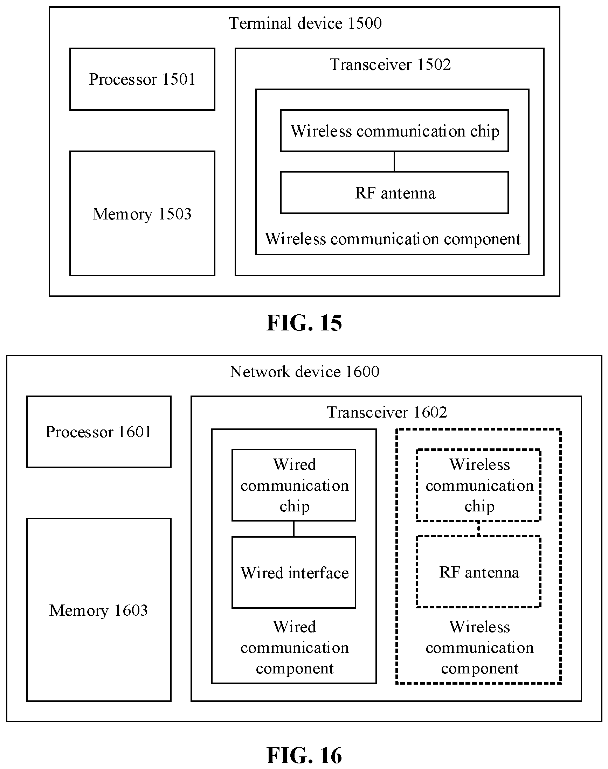

FIG. 15 illustrates a schematic structural diagram of a terminal device 1500 provided by an embodiment of the present application. The terminal device 1500 may be configured to perform the method operations performed by the terminal device in the above embodiments. The terminal device 1500 may include a processor 1501, a transceiver 1502, and a memory 1503. Here, the transceiver 1502 is configured to implement a transmission or reception function, for example to implement the above functions of the sending module 1110 and/or the receiving module 1120. The processor 1501 may be configured to implement other processing functions or control transmission and/or reception.

The processor 1501 includes one or more processing cores, and the processor 1501 runs software programs and modules to perform various functional applications and information processing.

The transceiver 1502 may include a receiver and a transmitter. For example, the receiver and the transmitter may be implemented as a same wireless communication component, which may include a wireless communication chip and a radio frequency (RF) antenna.

The memory 1503 may be coupled to the processor 1501 and the transceiver 1502.

The memory 1503 may be configured to store a computer program executed by a processor, and the processor 1501 is configured to execute the computer program to implement various operations performed by the terminal device in the above method embodiments.

Further, the memory 1503 may be implemented by any type of volatile or non-volatile storage device, including, but not limited to, a magnetic or optical disk, an electrically erasable programmable read-only memory, an erasable programmable read-only memory, a static ready-to-access memory, a read-only memory, a magnetic memory, a flash memory, a programmable read-only memory, or a combination thereof.

In some embodiments, the transceiver 1502 is configured to transmit uplink data on a first channel, where the first channel supports carrying control information.

For details not described in detail in the above embodiments, reference may be made to the description in the above method embodiments and it will not be repeated here.

FIG. 16 illustrates a schematic structural diagram of a network device 1600 provided by an embodiment of the present application. The network device 1600 may be used to perform the method operations performed by the network device in the above embodiments. The terminal device 1600 may include a processor 1601, a transceiver 1602, and a memory 1603. The transceiver 1602 is configured to implement transmission or reception functions, for example to implement the above functions of the receiving module 1210 and/or the sending module 1220, and the processor 1601 may be configured to implement other processing functions or control transmission and/or reception.

The processor 1601 includes one or more processing cores, and the processor 1601 runs software programs and modules to perform various functional applications and information processing.

The transceiver 1602 may include a receiver and a transmitter. For example, the transceiver 1602 may include a wired communication component, and the wired communication component may include a wired communication chip and a wired interface (e.g., an optical fiber interface). Optionally, the transceiver 1602 may also include a wireless communication component, and the wireless communication component may include a wireless communication chip and a RF antenna(s).

The memory 1603 may be coupled to the processor 1601 and the transceiver 1602.

The memory 1603 may be configured to store a computer program executed by a processor, and the processor 1601 is configured to execute the computer program to implement various operations performed by the network device in the above method embodiments.

Further, the memory 1603 may be implemented by any type of volatile or non-volatile storage device, including, but not limited to, a magnetic or optical disk, an electrically erasable programmable read-only memory, an erasable programmable read-only memory, a static ready-to-access memory, a read-only memory, a magnetic memory, a flash memory, a programmable read-only memory, or a combination thereof.

In some embodiments, the transceiver 1602 is configured to receive uplink data transmitted on a first channel, where the first channel supports carrying control information.

For details not described in detail in this embodiment, reference may be made to the above embodiments, and they will not be repeated here.

In an embodiment of the present application, there is further provided a computer readable storage medium, having stored therein a computer program that, when executed by a processor of a terminal device, cause to implement the method for data transmission on the terminal device side as described above.

In an embodiment of the present application, there is further provided a computer readable storage medium, having stored therein a computer program that, when executed by a processor of a network device, cause to implement the method for data transmission on the network device side as described above.

In some embodiments, the computer-readable storage medium may include a Read-Only Memory (ROM), a Random-Access Memory (RAM), a Solid State Drive (SSD), an optical disk, or the like. The RAMe may include a Resistance Random Access Memory (ReRAM) and a Dynamic Random Access Memory (DRAM).

In an embodiment of the present application, there is further provided a chip including programmable logic circuitry and/or program instructions, where the chip, when running on a terminal device, implements the method for data transmission on the terminal device side as described above.

In an embodiment of the present application, there is further provided a chip including programmable logic circuitry and/or program instructions, where the chip, when running on a network device, implements the method for data transmission on the network device side as described above.

In an embodiment of the present application, there is further provided a computer program product or a computer program, including computer instructions stored in a computer-readable storage medium, where a processor of a terminal device reads and executes the computer instructions from the computer-readable storage medium to implement the method for data transmission on the terminal device side as described above.

In an embodiment of the present application, there is further provided a computer program product or a computer program, including computer instructions stored in a computer-readable storage medium, where a processor of a network device reads and executes the computer instructions from the computer-readable storage medium to implement the method for data transmission on the network device side as described above.

It should be understood that the "indication" mentioned in the embodiments of the present application may be a direct indication, an indirect indication, or may represent an associated relationship. For example, A indicating B may mean that A directly indicates B, for example, B may be acquired by A. It may also mean that A indicates B indirectly, for example A indicates C, and B may be acquired by C. It may also mean that there is an association relationship between A and B.

In the description of the embodiments of the present application, the term "correspondence" may indicate that there is a direct correspondence or indirect correspondence between the two, or indicate that there is a correlation relationship between the two, or indicate a relationship between indicating and being indicated, configuring and being configured, or the like.

In some embodiments of the present application, the "predefined" may be implemented by pre-storing corresponding codes, tables, or other manners that may be used to indicate relevant information in devices (e.g., including terminal device and network device), the specific implementation of which is not limited by the present disclosure. For example, predefined may refer to what is defined in the protocol.

In some embodiments of the present application, the "protocol" may refer to a standard protocol in communication field, including, for example, an LTE protocol, an NR protocol, and related protocols applied in future communication systems, which are not limited in the present application.

The "multiple" mentioned herein refers to two or more. The term "and/or" herein describes an association relationship between associated objects, representing that there may be three kinds of relationships. For example, A and/or B may represent the following three situations: i.e., independent existence of A, existence of both A and B, and independent existence of B. In addition the character "/" generally represents that an "or" relationship is formed between the previous and next associated objects.

In addition, the numbering of operations described herein only illustrates one possible execution order among the operations, and in some other embodiments, the above operations may not be executed in the order of numbering, for example, two different numbered operations may be executed simultaneously, or two different numbered operations may be executed in the reverse order as illustrated, which is not limited in the embodiment of the present application.

Those skilled in the art should recognize that in one or more of the examples described above, the functions described in the embodiments of the present application may be implemented in hardware, software, firmware, or any combination thereof. When implemented in software, these functions may be stored in a computer readable medium or transmitted as one or more instructions or codes on a computer readable medium. The computer-readable medium includes a computer storage medium and communication medium, where communication medium includes any medium that facilitates transfer of a computer program from one place to another. The storage medium may be any available medium accessible by a general-purpose or special-purpose computer.

The above are only exemplary embodiments of the present application, and are not intended to limit the present application. Any modification, equivalent substitution, improvement, etc. made within the spirit and principle of the present application shall be included in the scope of protection of the present application.

## Claims

1. A method for data transmission, the method being performed by a terminal device and comprising:
transmitting uplink data on a first channel, the first channel supporting carrying control information.

2. The method of claim 1, further comprising:
receiving first control information, wherein the transmitting the uplink data on the first channel is determined according to the first control information.

3. The method of claim 2, wherein the first control information comprises first indication information,
the first indication information is used to indicate whether the uplink data is transmitted over the first channel; and/or
the first indication information is used to indicate a first format among a plurality of formats of the first channel, and the uplink data is transmitted on the first channel of the first format.

4. The method of claim 2, wherein the first control information is scrambled with a scrambling sequence,
the scrambling sequence is used to indicate whether the uplink data is transmitted over the first channel; and/or
the scrambling sequence is used to indicate a first format among a plurality of formats of the first channel, and the uplink data is transmitted on the first channel of the first format.

5. The method of claim 2, wherein
a format of the first control information is used to indicate whether the uplink data is transmitted over the first channel; and/or
a format of the first control information is used to indicate a first format among a plurality of formats of the first channel, and the uplink data is transmitted on the first channel of the first format.

6. The method of any one of claims 2 to 5, wherein a format of the first control information is an information format for scheduling of an uplink channel.

7. The method of claim 2, wherein the first control information is used to schedule downlink data and the uplink data.

8. The method of claim 7, wherein
uplink feedback information corresponding to the downlink data is transmitted on the first channel; or
uplink feedback information corresponding to the downlink data is transmitted on a second channel, and the second channel is different from the first channel.

9. The method of claim 7 or 8, wherein the first control information is used to indicate whether the uplink data and first uplink feedback information are transmitted on the same channel, and the first uplink feedback information is uplink feedback information corresponding to the downlink data.

10. The method of any one of claims 2 to 9, wherein the first control information is used to indicate resource information of the first channel.

11. The method of claim 10, wherein the resource information of the first channel comprises at least one of the following:
time domain resource information of the first channel, wherein the time domain resource information of the first channel is used to indicate at least one time domain unit occupied by the first channel, and the time domain unit is any one of the following: a slot, a subslot, or a symbol;
frequency domain resource information of the first channel;
spatial domain resource information of the first channel;
hybrid automatic repeat request (HARQ) process information corresponding to the uplink data carried on the first channel;
redundancy version information corresponding to the uplink data carried on the first channel;
power control information of the first channel;
data amount information of the uplink data carried on the first channel; or
spreading information of the first channel.

12. The method of claim 11, wherein the time domain resource information of the first channel indicates the at least one time domain unit occupied by the first channel through at least one of following manners:
indicating an offset of a serial number of a first time domain unit among the at least one time domain unit occupied by the first channel with respect to a serial number of a second time domain unit among at least one time domain unit occupied by downlink data scheduled by the first control information;
indicating an offset of a serial number of a first time domain unit among the at least one time domain unit occupied by the first channel with respect to a serial number of a third time domain unit among at least one time domain unit occupied by uplink feedback information corresponding to downlink data scheduled by the first control information;
indicating an offset of a serial number of a first time domain unit among the at least one time domain unit occupied by the first channel with respect to a serial number of a fourth time domain unit among at least one time domain unit occupied by the first control information; or
indicating an absolute value of a serial number of a first time domain unit among the at least one time domain unit occupied by the first channel.

13. The method of any one of claims 2 to 12, wherein the first channel satisfies a following timing condition that a start time of the first channel is not earlier than a first preset duration after an end time of the first control information.

14. The method of claim 1, further comprising:
receiving first configuration information, wherein the transmitting the uplink data on the first channel is determined according to the first configuration information.

15. The method of claim 14, wherein information of the first channel comprises at least one of the following:
a period of a resource used for the first channel;
a time domain position of a resource used for the first channel;
a frequency domain position of a resource used for the first channel;
a format of a resource used for the first channel;
a coding rate of a resource used for the first channel;
a data amount of data carried on the first channel; or
spreading information of the first channel.

16. The method of any one of claims 1 to 15, wherein a channel coding of Polar code or a channel coding of small block lengths is adopted for the uplink data.

17. The method of any one of claims 1 to 16, wherein a data amount of the uplink data is determined according to at least one of the following:
a number of resource blocks (RBs) in the first channel used for transmitting the uplink data, a number of resource elements (REs) per RB used for transmitting the uplink data, a number of REs used for transmitting the uplink data in the first channel, a number of time domain units, in a resource used for the first channel, used for transmitting the uplink data, a coding rate of a resource used for the first channel, a coding rate corresponding to the uplink data, a modulation mode of a resource used for the first channel, or reference signal overhead of a resource used for the first channel.

18. The method of any one of claims 1 to 17, wherein the first channel comprises at least one of the following:
a physical uplink control channel (PUCCH); or
a physical uplink shared channel (PUSCH) with a first characteristic;
wherein the first characteristic comprises at least one of: using spreading, adopting channel coding of Polar code, or adopting channel coding of small block lengths.

19. A method for data transmission, the method being performed by a network device and comprising:
receiving uplink data transmitted on a first channel, the first channel supporting carrying control information.

20. The method of claim 19, further comprising:
sending first control information, wherein transmission of the uplink data on the first channel is determined according to the first control information.

21. The method of claim 20, wherein the first control information comprises first indication information,
the first indication information is used to indicate that whether the uplink data is transmitted over the first channel; and/or
the first indication information is used to indicate a first format among a plurality of formats of the first channel, and the uplink data is transmitted on the first channel of the first format.

22. The method of claim 20, wherein the first control information is scrambled with a scrambling sequence,
the scrambling sequence is used to indicate whether the uplink data is transmitted over the first channel; and/or
the scrambling sequence is used to indicate a first format among a plurality of formats of the first channel, and the uplink data is transmitted on the first channel of the first format.

23. The method of claim 20, wherein
a format of the first control information is used to indicate whether the uplink data is transmitted over the first channel; and/or
a format of the first control information is used to indicate a first format among a plurality of formats of the first channel, and the uplink data is transmitted on the first channel of the first format.

24. The method of any one of claims 20 to 23, wherein a format of the first control information is an information format for scheduling of an uplink channel.

25. The method of claim 20, wherein the first control information is used to schedule downlink data and the uplink data.

26. The method of claim 25, wherein
uplink feedback information corresponding to the downlink data is transmitted on the first channel; or
uplink feedback information corresponding to the downlink data is transmitted on a second channel, and the second channel is different from the first channel.

27. The method of claim 25 or 26, wherein the first control information is used to indicate whether the uplink data and first uplink feedback information are transmitted on the same channel, and the first uplink feedback information is uplink feedback information corresponding to the downlink data.

28. The method of any one of claims 20 to 27, wherein the first control information is used to indicate resource information of the first channel.

29. The method of claim 28, wherein the resource information of the first channel comprises at least one of the following:
time domain resource information of the first channel, wherein the time domain resource information of the first channel is used to indicate at least one time domain unit occupied by the first channel, and the time domain unit is any one of the following: a slot, a subslot, or a symbol;
frequency domain resource information of the first channel;
spatial domain resource information of the first channel;
hybrid automatic repeat request (HARQ) process information corresponding to the uplink data carried on the first channel;
redundancy version information corresponding to the uplink data carried on the first channel;
power control information of the first channel;
data amount information of the uplink data carried on the first channel; or
spreading information of the first channel.

30. The method of claim 29, wherein the time domain resource information of the first channel indicates the at least one time domain unit occupied by the first channel through at least one of following manners:
indicating an offset of a serial number of a first time domain unit among the at least one time domain unit occupied by the first channel with respect to a serial number of a second time domain unit among at least one time domain unit occupied by downlink data scheduled by the first control information;
indicating an offset of a serial number of a first time domain unit among the at least one time domain unit occupied by the first channel with respect to a serial number of a third time domain unit among at least one time domain unit occupied by uplink feedback information corresponding to downlink data scheduled by the first control information;
indicating an offset of a serial number of a first time domain unit among the at least one time domain unit occupied by the first channel with respect to a serial number of a fourth time domain unit among at least one time domain unit occupied by the first control information; or
indicating an absolute value of a serial number of a first time domain unit among the at least one time domain unit occupied by the first channel.

31. The method of any one of claims 20 to 30, wherein the first channel satisfies a following timing condition that a start time of the first channel is not earlier than a first preset duration after an end time of the first control information.

32. The method of claim 19, further comprising:
sending first configuration information, wherein transmission of the uplink data on the first channel is determined according to the first configuration information.

33. The method of claim 32, wherein information of the first channel comprises at least one of the following:
a period of a resource used for the first channel;
a time domain position of a resource used for the first channel;
a frequency domain position of a resource used for the first channel;
a format of a resource used for the first channel;
a coding rate of a resource used for the first channel;
a data amount of data carried on the first channel; or
spreading information of the first channel.

34. The method of any one of claims 19 to 33, wherein a channel coding of Polar code or a channel coding of small block lengths is adopted for the uplink data.

35. The method of any one of claims 19 to 34, wherein a data amount of the uplink data is determined according to at least one of the following: a number of resource blocks (RBs) in the first channel used for transmitting the uplink data, a number of resource elements (REs) per RB used for transmitting the uplink data, a number of REs in the first channel used for transmitting the uplink data, a number of time domain units, in a resource used for the first channel, used for transmitting the uplink data, a coding rate of a resource used for the first channel, a coding rate corresponding to the uplink data, a modulation mode of a resource used for the first channel, or reference signal overhead of a resource used for the first channel.

36. The method of any one of claims 19 to 35, wherein the first channel comprises at least one of the following:
a physical uplink control channel (PUCCH); or
a physical uplink shared channel (PUSCH) with a first characteristic;
wherein the first characteristic comprises at least one of: using spreading, adopting channel coding of Polar code, or adopting channel coding of small block lengths.

37. An apparatus for data transmission, comprising:
a sending module, configured to transmit uplink data on a first channel, the first channel supporting carrying control information.

38. An apparatus for data transmission, comprising:
a receiving module, configured to receive uplink data transmitted on a first channel, the first channel supporting carrying control information.

39. A communication device, comprising: a processor, and a memory for storing a computer program, wherein the processor executes the computer program to implement the method of any one of claims 1 to 17, or to implement the method of any one of claims 19 to 36.

40. A computer readable storage medium, having stored therein a computer program, which is executed by a processor to implement the method of any one of claims 1 to 18, or to implement the method of any one of claims 19 to 36.

41. A chip, comprising programmable logic circuitry and/or program instructions, wherein the chip, when running, is configured to implement the method of any one of claims 1 to 18, or to implement the method of any one of claims 19 to 36.

42. A computer program product, comprising computer instructions stored in a computer readable storage medium, wherein a processor reads and executes the computer instructions from the computer readable storage medium to implement the method of any one of claims 1 to 18, or to implement the method of any one of claims 19 to 36.
